# EUROPEAN PATENT SPECIFICATION

(11) **EP 4 041 523 B1**
(45) Date of publication and mention of the grant of the patent: **20.11.2024**
(21) Application number: 20797611.9
(22) Date of filing: 06.10.2020
(51) Int. Cl.: B29C 45/28, B29C 45/77, B29C 45/30, B29C 45/74, B29C 45/27

(54) **ELECTRIC ACTUATOR DRIVE FOR INJECTION MOLDING FLOW CONTROL**
ELEKTRISCHER STELLANTRIEB FÜR SPRITZGIESSFLUSSSTEUERUNG
PILOTE D'ACTIONNEUR ÉLECTRIQUE POUR LA COMMANDE D'ÉCOULEMENT D'UN MOULAGE PAR INJECTION

(30) Priority: 21.10.2019 US 201962923656 P; 20.02.2020 US 202062978928 P
(43) Date of publication of application: 17.08.2022
(73) Proprietor: Synventive Molding Solutions, Inc., Peabody, MA 01960 (US)
(72) Inventor: GALATI, Vito, Rowley, MA 01969 (US); DE OLIVEIRA ANTUNES, Sergio, Ribeiro, Amesbury, MA 01913 (US); YANG, Lin, Lynnfield, MA 01940 (US); WARD, Daniel, Norman, West Newbury, MA 01985 (US)
(74) Representative: Fuchs Patentanwälte Partnerschaft mbB
(86) International application number: PCT/US2020/054354
(87) International publication number: WO 2021/080767

(56) References cited:
- US-A- 5 362 222
- US-A1- 2007 273 060
- US-A1- 2018 264 698
- US-B1- 6 294 122
- US-B1- 6 309 208

## Description

### BACKGROUND OF THE INVENTION

Injection molding systems have been developed for controlling fluid flow with electric actuators and for controlling fluid flow upstream of the gate to the mold cavity as disclosed in U.S. Patent Nos. 6,294,122 and 6,464,909 and 7,597,828 and 7,029,268 and 7,234,929.

US 2018/0264698 A1 relates to an apparatus for injection molding of plastic materials, the apparatus having an electric motor, US 5,362,222 A relates to an injection molding machine having a vector controlled AC drive system.

### SUMMARY OF THE INVENTION

The invention is defined by the appended claims. In accordance with the invention there is provided an injection molding apparatus (1) comprising: an injection molding machine (500), a manifold (15) that receives an injection fluid material (13) under pressure from the injection molding machine (500), a mold (25, 27, 300) having a cavity (5, 30) and at least one valve comprising:
an actuator (14, 940, 941, 942) comprising a rotor (940r, 941r, 942r) controllably rotatable by electric power, the actuator (14, 940, 941, 942) being interconnected to a controller (16) that generates digital signals (DC) that are received by a drive device that is (940d, 941d, 942d) mounted to or housed within an actuator housing (940h, 941h, 942h) that houses the rotor (940r, 941r, 942r), the drive device utilizing the drive signals (DC) to control rotational movement of the rotor (940r, 941r, 942r),
a valve pin (1040, 1041, 1042) comprising a shaft having an axis (X) and a protrusion (102) disposed at a selected position along the axis of the shaft, the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate leading to the cavity of the mold,
the protrusion (102) having a control surface (45, 102m) and the downstream feed channel having a complementary surface (47, 103s) adapted to controllably vary rate of velocity of flow according to controlled axial positioning of the control surface (45, 102m) of the protrusion (102) relative to the complementary surface (47, 103s) of the downstream feed channel (17, 19, 160, 940c, 941c, 942c).

The actuator includes a driver (940dr, 941dr, 942dr) that receives electrical energy or power from the drive device (940d, 941d, 942d), the drive device (940d, 941d, 942d) comprising an interface that receives and controllably distributes electrical energy or power in controllably varied amounts during the course of an injection cycle to the driver (940dr, 941dr, 942dr).

The actuator housing can be adapted to house the electrical drive (940d, 941d, 942d), the rotor (940r, 941r, 942r) and the driver (940dr, 941dr, 942dr) and to support the rotor (940r, 941r, 942r) such that the rotor is drivably rotatable, wherein the actuator housing (940h, 941h, 942h) is mounted in proximity or disposition relative to the heated manifold (40) such that one or the other or both of the housing (940h, 941h, 942h) and the electrical drive (940d, 941d, 942d) is or are in substantial heat communication with the heated manifold (40).

In another aspect there is provided an apparatus (1) comprising: an injection molding machine (500), a manifold (15) that receives an injection fluid material (13) under pressure from the injection molding machine (500), a mold (25, 27, 300) having a cavity (5, 30) and at least one valve comprising:
an actuator (14, 940, 941, 942) comprising a rotor (940r, 941r, 942r) controllably rotatable by electric power, the actuator (14, 940, 941, 942) being interconnected to a controller (16) that generates control signals,
a drive device (940d, 941d, 942d) interconnected to the controller (16), the drive device comprising an interface that receives and controllably distributes electrical energy or power in controllably varied amounts during the course of an injection cycle to a driver (940dr, 941dr, 942dr) for the rotor (940r, 941r, 942r) according to the control signals,
a valve pin (1040, 1041, 1042) comprising a shaft having an axis (X) and a protrusion (102) disposed at a selected position along the axis of the shaft, the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate leading to the cavity of the mold,
the protrusion (102) having a control surface (45, 102m) and the downstream feed channel having a complementary surface (47, 103s) adapted to controllably vary rate of velocity of flow according to controlled axial positioning of the control surface (45, 102m) of the protrusion (102) relative to the complementary surface (47, 103s) of the downstream feed channel (17, 19, 160, 940c, 941c, 942c).

In such an apparatus, the controller (16) can generate digital control signals (DC), the driver being adapted to receive and utiliize the digital control signals (DC) to control rotational movement of the rotor (940r, 941r, 942r).

The drive device is (940d, 941d, 942d) is typically mounted to or housed within an actuator housing (940h, 941h, 942h) that houses the rotor (940r, 941r, 942r).

The actuator housing is typically adapted to house the drive device (940d, 941d, 942d), the rotor (940r, 941r, 942r) and the driver (940dr, 941dr, 942dr) and to support the rotor (940r, 941r, 942r) such that the rotor is drivably rotatable, wherein the actuator housing (940h, 941h, 942h) is mounted in proximity or disposition relative to the heated manifold (40) such that one or the other or both of the housing (940h, 941h, 942h) and the electrical drive (940d, 941d, 942d) is or are in substantial heat communication with the heated manifold (40).

In another aspect there is provided an injection molding apparatus (1) comprising: an injection molding machine (500), a manifold (15) that receives an injection fluid material (13) under pressure from the injection molding machine (500), a mold (25, 27, 300) having a cavity (5, 30) and at least one valve comprising:
an actuator (14, 940, 941, 942) comprising a rotor (940r, 941r, 942r) controllably rotatable by electric power, the actuator (14, 940, 941, 942) being interconnected to a controller (16) that generates control signals that control distribution of electrical energy or power in controllably varied amounts during the course of an injection cycle to a driver (940dr, 941dr, 942dr) for the rotor (940r, 941r, 942r) according to the control signals,
a valve pin (1040, 1041, 1042) comprising a shaft having an axis (X) and a protrusion (102) disposed at a selected position along the axis of the shaft, the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate leading to the cavity of the mold,
the protrusion (102) having a control surface (45, 102m) and the downstream feed channel having a complementary surface (47, 103s) adapted to (a) controllably vary rate of velocity of flow according to controlled axial positioning of the control surface (45, 102m) of the protrusion (102) relative to the complementary surface (47, 103s) of the downstream feed channel (17, 19, 160, 940c, 941c, 942c) and (b) such that reactive forces of the injection fluid material (13) against the valve pin (1040, 1041, 1042) enable use of an electric motor having a reduced power or energy output.

Such an apparatus typically further comprises a drive device (940d, 941d, 942d) interconnected to the controller (16), the drive device comprising an interface that receives and controllably distributes the electrical energy or power in controllably varied amounts during the course of an injection cycle to the driver (940dr, 941dr, 942dr) for the rotor (940r, 941r, 942r) according to the control signals generated by the controller (16).

In another aspect there is provided an injection molding apparatus (1) comprising: an injection molding machine (500), a manifold (15) that receives an injection material (18) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X) and a control surface (43, 45, 102m) disposed at a selected position along the axis (X) of the shaft, the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m) to controllably vary rate or velocity of flow according to controlled axial positioning of the control surface (43, 45, 102m) relative to the complementary surface (47, 103s) of the downstream feed channel (17, 19, 160, 940c, 941c, 942c).

The complementary surface (47, 103s) is preferably disposed upstream and away from the gate (7, 9, 32, 34, 36).

The electrical drive device (940d, 941d, 942d) typically receives electrical energy or power from a power source (PS) and controllably distributes the received electrical energy or power in controllably varied amounts during the course of an injection cycle to the driver (940dr, 941dr, 942dr).

The electrical drive device (940d, 941d, 942d) typically includes a pulse-width modulator (PWM) that converts received electrical energy or power into sinusoidal voltage waveforms, each sinusoidal voltage waveform being adapted to drive a corresponding phase-coil of the actuator driver (940dr, 941dr, 942dr).

The pulse-width modulator (PWM) typically comprises an inverter or a comparator.

The pulse width modulator (PWM) can comprise a three-phase inverter that converts electrical energy or power received from the interface into three sinusoidal voltage waveforms, each one of the three sinusoidal voltage waveforms being adapted to drive a corresponding one of three phase-coils of the actuator driver.

The electrical energy or power received at or by the pulse width modulator (PWM) typically comprises a DC bus voltage.

The interface of the electrical drive (940d, 941d, 942d) can be adapted to receive one or more control signals from a controller (16) of the injection molding apparatus (1) and to convert electrical energy or power received from the power source (PS) into sinusoidal waveforms based on the one or more control signals.

The interface is typically comprised of the pulse width modulator (PWM) which converts electrical energy or power received from the power source into sinusoidal waveforms based on the one or more control signals.

The one or more control signals received by the interface can contain control information causing the pulse width modulator (PWM) to convert the received electrical energy or power into sinusoidal waveforms adapted to drive the corresponding phase-coils of the actuator driver to adjust one or more of a position, a velocity or torque of the actuator rotor (940r, 941r, 942r).

The one or more control signals can comprise analog electrical signals received at the electrical drive from the controller (16).

The electrical drive (940d, 941d, 942d) typically comprises one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller.

The digital control signals can include one or more of differential position commands, differential current commands, and differential velocity commands.

The digital signal receiving and transmitting device (16r, 16s) is typically adapted to receive digital signals from the actuator, wherein the digital signals received from the actuator include one or more feedback signals corresponding to operation of one or more of the actuator and the actuator rotor.

The pulse width modulator (PWM) typically converts the electrical energy or power received from the interface into sinusoidal waveforms adapted to drive the corresponding phase-coils of the actuator driver based at least in part on the one or more feedback signals. The one or more feedback signals received from the actuator can include one or more of an incremental feedback signal and an absolute feedback signal.

The actuator typically has a housing (940h, 941h, 942h) that houses the rotor (940r, 941r, 942r) and the driver (940dr, 941dr, 942dr), the housing being adapted to support the rotor (940r, 941r, 942r), the electrical drive device (940d, 941d, 942d) being housed within or by the housing (940h, 941h, 942h) or being mounted on or to the housing (940h, 941h, 942h), wherein the housing (940h, 941h, 942h) is mounted in proximity or disposition relative to the heated manifold (40) such that one or the other or both of the housing (940h, 941h, 942h) and the electrical drive (940d, 941d, 942d) is or are in substantial heat communication or contact with the heated manifold (40).

The housing (940h, 941h, 942h) can be mounted on or to a clamping plate (80) in an arrangement such that one or the other or both of the housing (940h, 941h, 942h) and the electrical drive (940d, 941d, 942d) are in substantial heat or thermal communication with the heated manifold (40).

The housing (940h, 941h, 942h) of the actuator can be interconnected to a linear travel converter (940I, 941I, 942I) in an arrangement wherein the valve pin (1040, 1041, 1042) is adapted to be driven along a linear axis (X) that is non coaxial relative to the drive axis (y), the linear travel converter (940I, 941I, 942I) being mounted on or to or disposed in heat conductive communication with the heated manifold (40).

The linear travel converter (940I, 941I, 942I) is mounted on or to one or the other or both of the heated manifold (40) or a clamping plate (80).

The linear travel converter typically includes a converter housing (940Ih) mounted in direct or indirect heat conductive contact to the heated manifold (40), the housing (940h, 941h, 942h) being connected to the converter housing (940lh) in thermally conductive contact therewith.

The linear travel converter typically includes a converter housing (940lh) mounted on or to mounts comprised of a metal material that are mounted in direct metal to metal contact or communication with the heated manifold (40).

The valve pin (1040, 1041, 1042) can have an upstream end (1041ue) coupled to the actuator, a downstream end (1041de) that closes the gate on downstream movement of the valve pin to a gate closed position, the control surface (43, 45, 102m) being disposed in a selected axial position intermediate the upstream (1041ue) and downstream ends (1041de) that is adapted to interact with the complementary surface (103s) to decrease rate of material flow on upstream movement of the valve pin through a selected path of travel (CP) and to increase rate of material flow on downstream movement of the valve pin through the selected path of travel (CP).

Such an apparatus typically includes a sensor (PSO, PS1, PS1a, PS2, PS2a) that senses pressure of the injection material, the sensor (PSO, PS1, PS1a, PS2, PS2a) sending a signal indicative of sensed pressure to the controller (16), the controller including instructions that compare the sensed pressure to a target pressure and adjust axial position of the valve pin such that material pressure is adjusted to track the target pressure.

The sensor is preferably adapted to sense the injection material pressure at a position downstream of the control surface of the valve pin.

The actuator typically includes a driver (940dr, 941dr, 942dr) that receives electrical energy or power from the drive device (940d, 941d, 942d), the drive device (940d, 941d, 942d) comprising an interface that receives and controllably distributes electrical energy or power in controllably varied amounts during the course of an injection cycle to the driver (940dr, 941dr, 942dr).

The complementary surface (47, 103s) and the control surface (43, 45, 102m) typically have a maximum diameter or radial dimension of about 12 mm.

The complementary surface (47, 103s) and the control surface (43, 45, 102m) can have a maximum diameter or radial dimension of about 10 mm.

In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X), the valve pin being interconnected at an upstream end (1041ue) to the rotor in an arrangement wherein the valve pin is controllably drivable by the actuator (14, 940, 941, 942) along a linear path of travel (XX) upstream and downstream through a downstream feed channel (940c, 941c, 942c), the valve pin and the downstream feed channel being adapted to interface with each other to vary rate or velocity of flow of the injection material to and through a gate (7, 9, 32, 34, 36) leading to the cavity of the mold, a sensor (PSO, PS1, PS1a, PS2, PS2a) that senses pressure of the injection material within a channel (17, 19, 940c, 941c, 942c, 5011) upstream of the gate (7, 9, 32, 34, 36), a controller (16) including a program that receives signals from the sensor indicative of the sensed pressure, the program generating instructions based on the received signals that are sent to the actuator (14, 940, 941, 942) via the electrical drive device (940d, 941d, 942d), the instructions controlling interfacing of the valve pin and the downstream feed channel to control the rate or velocity of flow of the injection material during the course of an injection cycle.

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin.

In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X) and a control surface (43, 45, 102m), the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m) such that reactive upstream forces exerted on the valve pin (1040, 1041, 1042) are minimized.

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin
In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X) and a control surface (43, 45, 102m), the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m) at a position disposed upstream and away from the gate (32, 34, 36).

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin
In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X) and a control surface (43, 45, 102m), the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m). the electrical drive (940d, 941d, 942d) comprising one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin.

In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r), a valve pin (1040, 1041, 1042) comprising a shaft having an axis (X), the valve pin being interconnected at an upstream end (1041ue) to the rotor in an arrangement wherein the valve pin is controllably drivable by the actuator (14, 940, 941, 942) along a linear path of travel (XX) upstream and downstream through a downstream feed channel (940c, 941c, 942c), the valve pin and the downstream feed channel being adapted to interface with each other to vary rate or velocity of flow of the injection material to and through a gate (7, 9, 32, 34, 36) leading to the cavity of the mold, a pressure sensor (PSO, PS1, PS1a, PS2, PS2a) that senses pressure of the injection material within a channel (17, 19, 940c, 941c, 942c, 5011) upstream of the gate (7, 9, 32, 34, 36), a controller (16) including a program that receives signals from the pressure sensor (PSO, PS1, PS1a, PS2, PS2a) indicative of the sensed pressure, the program generating instructions based on the received signals that are sent to the actuator (14, 940, 941, 942) via the electrical drive device (940d, 941d, 942d), the instructions controlling interfacing of the valve pin and the downstream feed channel to control the rate or velocity of flow of the injection material during the course of an injection cycle, a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin

In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), valve pin (1040, 1041, 1042) comprising a shaft having an axis (X) and a control surface (43, 45, 102m), the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m), the drive signals instructing the rotor (940r, 941r, 942r) to controllably drive the control surface (43, 45, 102m) to one or more positions relative to the complementary surface (47, 103s) such that rate or velocity of flow of the injection material is controllably variable, the actuator (940, 941, 942) and the controller (16) being adapted to receive (16r) and transmit (16s) digital signals between the actuator and the controller (16), wherein the digital signals include one or more control signals received by the actuator (16r) from the controller (16).

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin

In another aspect there is provided an injection molding apparatus (1) comprising: an injection molding machine (500), a manifold (15) that receives an injection material (13) under pressure from the injection molding machine (500), a mold (25, 27, 300) having a cavity (5, 30) and at least one valve comprising: an actuator (14, 940, 941, 942) comprising a rotor (940r, 941r, 942r) controllably rotatable by electric power, the actuator (14, 940, 941, 942) being interconnected to a controller (16) that generates drive signals (DC), a valve pin (1040, 1041, 1042) comprising a shaft having an axis (X) and a control surface (43, 45, 102m), the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold, the downstream feed channel having a complementary surface (47, 103s) adapted to interface with the control surface (43, 45, 102m), the drive signals instructing the rotor (940r, 941r, 942r) to controllably drive the control surface (43, 45, 102m) to one or more positions relative to the complementary surface (47, 103s) such that rate or velocity of flow of the injection material is controllably variable, the downstream feed channel (17, 19, 160, 940c, 941c, 942c) delivering injection material to a further downstream channel (160, 942c2) having a channel axis (Y, Z) that is non coaxial relative to the linear path of travel (XX) of the valve pin.

In such an apparatus, the downstream feed channel preferably has a complementary surface (47, 103s) adapted to interface with the control surface (43, 45, 102m) such that reactive upstream forces exerted on the valve pin (1040, 1041, 1042) are minimized.

In such an apparatus the downstream feed channel typically has a complementary surface (47, 103s) adapted to interface with the control surface (43, 45, 102m) at a position disposed upstream and away from the gate (32, 34, 36).

In such an apparatus the electrical drive (940d, 941d, 942d) can comprise one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller (16).

Such an apparatus can include a position sensor (POS, POS0, POS1, POS2) that sends a position signal (POS0s, POS1s, POS2s) indicative of position of the valve pin (1040, 1041, 1042) to the controller (16), the program including instructions that utilize the position signal to instruct the actuator (14, 940, 941, 942) to move the valve pin (1040, 1041, 1042) to one or more predetermined positions during the course of an injection cycle.

In such an apparatus the actuator (940, 941, 942) and the controller (16) can be adapted to receive (16r) and transmit (16s) digital signals between the actuator and the controller (16), wherein the digital signals include one or more control signals received by the actuator (16r) from the controller (16).

In such an apparatus the downstream feed channel (17, 19, 160, 940c, 941c, 942c) can be adapted to deliver injection material to a further downstream channel (160, 942c2) having a channel axis (Y, Z) that is non coaxial relative to the linear path of travel (XX) of the valve pin.

In another aspect of the invention there is provided a method of performing an injection molding cycle comprising operating any of the apparatuses described herein.

### BRIEF DESCRIPTION OF THE DRAWINGS

The accompanying drawings contain numbering of components and devices that correspond to the numbering appearing in the foregoing Summary and following description.

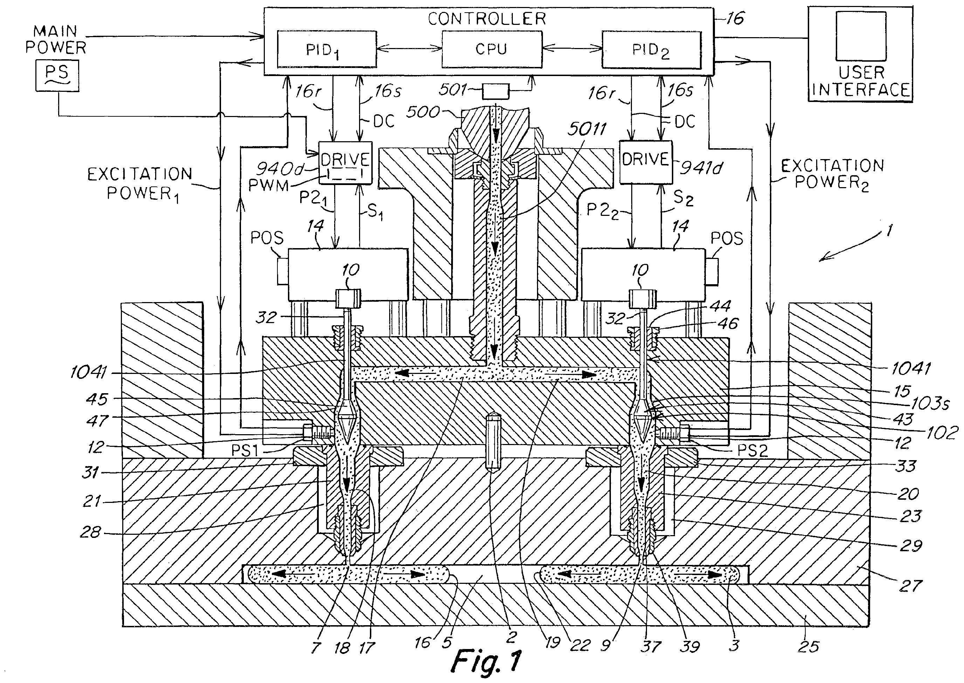

Figure 1 is a schematic cross section of an injection molding system comprised of an electric or electronic actuator interconnected to a shortened valve pin without a downstream gate closing needle portion, the distal end of the shortened valve pin having a bulbous portion or protrusion that has a flow control surface that interfaces with a complementary control surface of a flow channel along a selected position upstream of and away from the gate to control the rate of flow of injection fluid upstream of the gate during the course of an injection molding cycle, the electric or electronic actuators being interconnected to an electronic drive control device that is mounted to the housing of the electric or electronic actuator, the electronic drive control device receiving digital control and other signals from a remotely mounted controller containing a program that executes an algorithm for controlling operation of the electric or electronic actuator and the position of the valve pin within the flow channel during the course of an injection cycle.

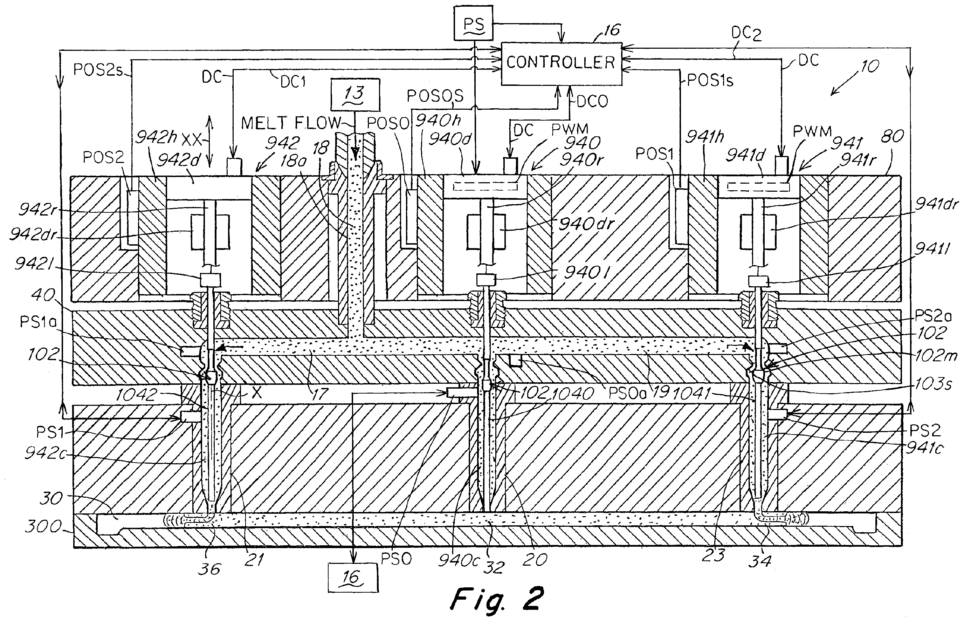

Fig. 2 is a side sectional schematic of a sequential valve gated system similar to the Fig. 1 system showing three valves with extended pins and that have electric or electronic actuators that have a drive control mechanism that is integrated together with the body or housing of the actuator that houses the rotor and rotor drive components of the actuator.

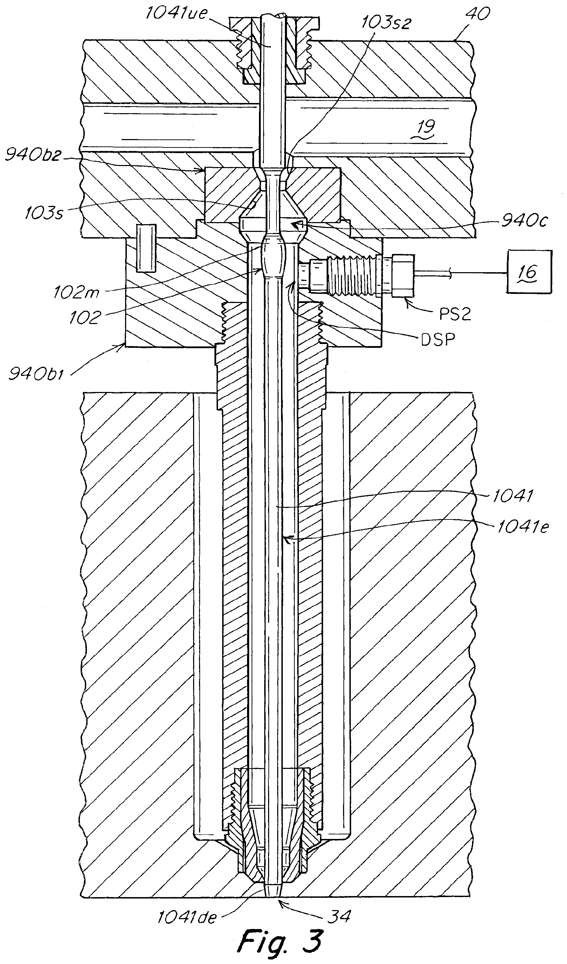

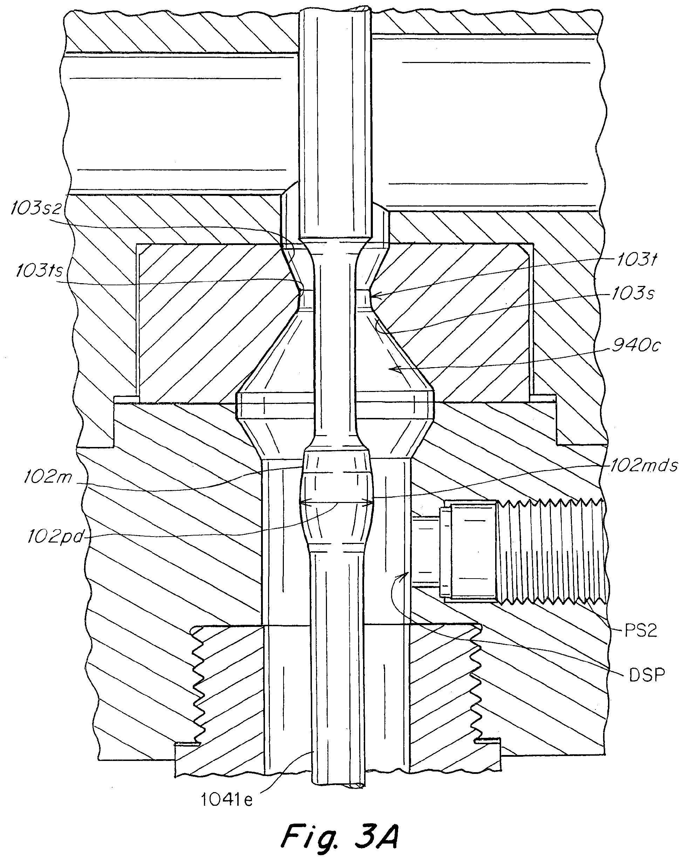

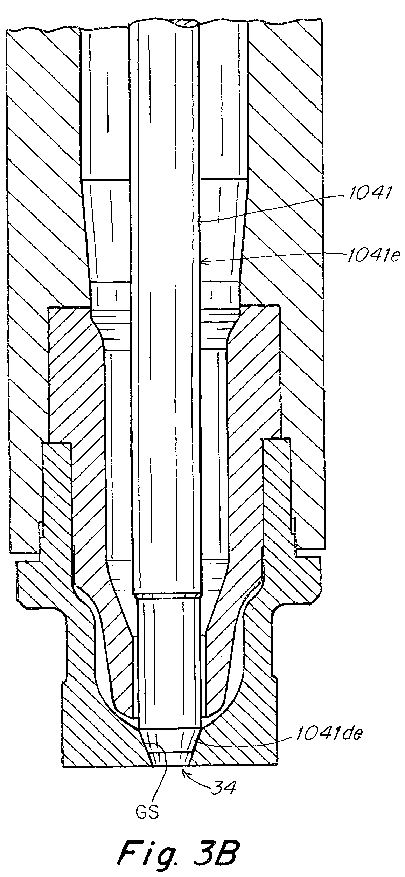

Fig. 3 is a cross sectional view of one example of a valve pin assembly, the valve pin having an upstream protrusion having a control surface 102m that interfaces with a complementary inside surface 103s of the downstream flow channel that leads to the gate of the cavity, the upstream control surface of the pin being disposed in a flow open position with respect to the complementary inside channel surface. And, in the position shown in Fig. 3, the downstream needle or shaft extension 1041e of the pin 1041 is disposed in a gate closed or injection material stopped position.
Fig. 3A is a closeup sectional view of the throat, control surface 102m and complementary channel surface 103s elements of the Fig. 3 subassembly.
Fig. 3B is a is closeup sectional view of the distal valve and nozzle or gate ends of the Fig. 3 subassembly.

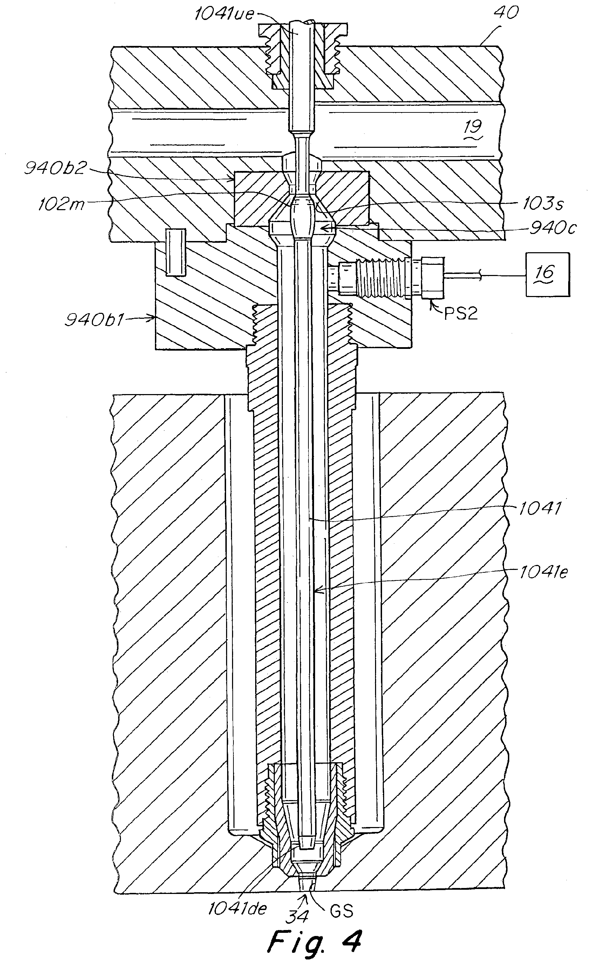

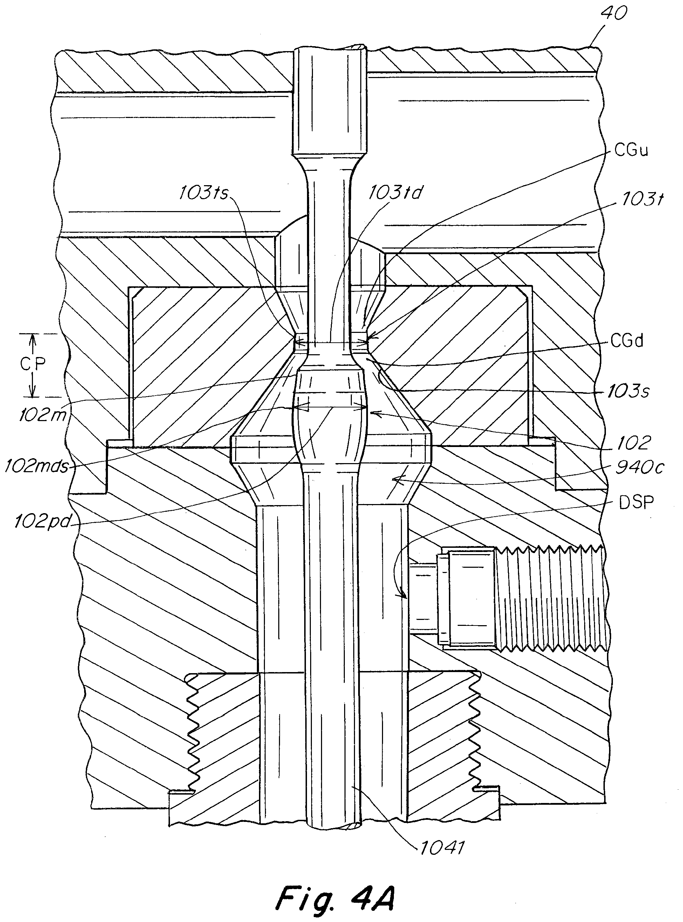

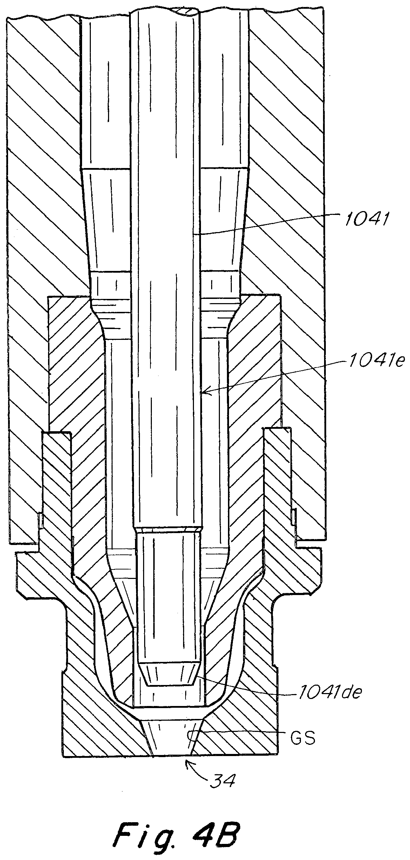

Fig. 4 is a view similar to Fig. 3 showing the valve pin component disposed in an intermediate upstream position relative to the position shown in Fig. 3 where the rate of flow of injection material is restricted by interfacing or interaction of the control surface 102m and complementary surface 103s and flow is enabled at the gate area 34 with the tip end of the valve pin being withdrawn upstream from the gate surface GS.
Fig. 4A is a closeup sectional view of the throat, control surface 102m and complementary channel surface 103s elements of the Fig. 4 subassembly view.
Fig. 4B is a is closeup sectional view of the distal valve and nozzle or gate ends of the Fig. 4 view and subassembly.

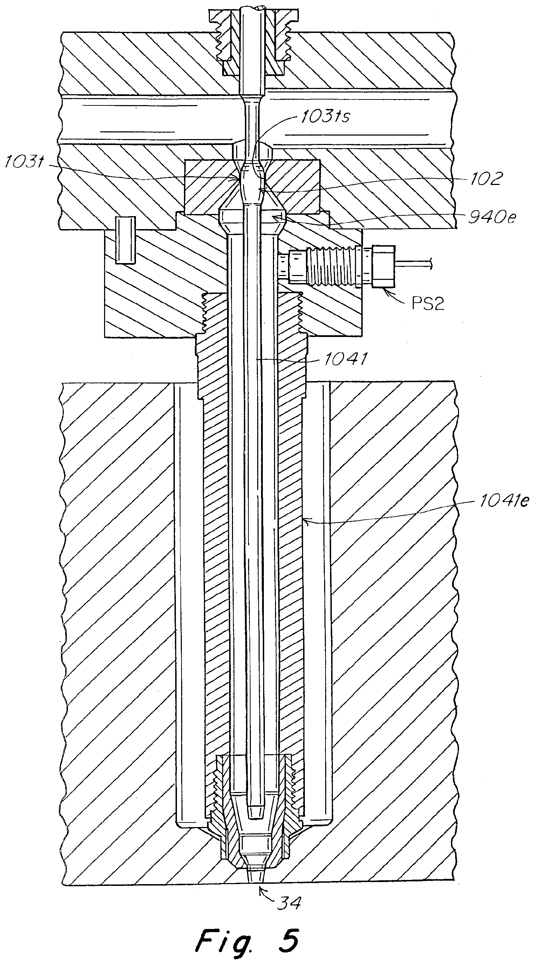

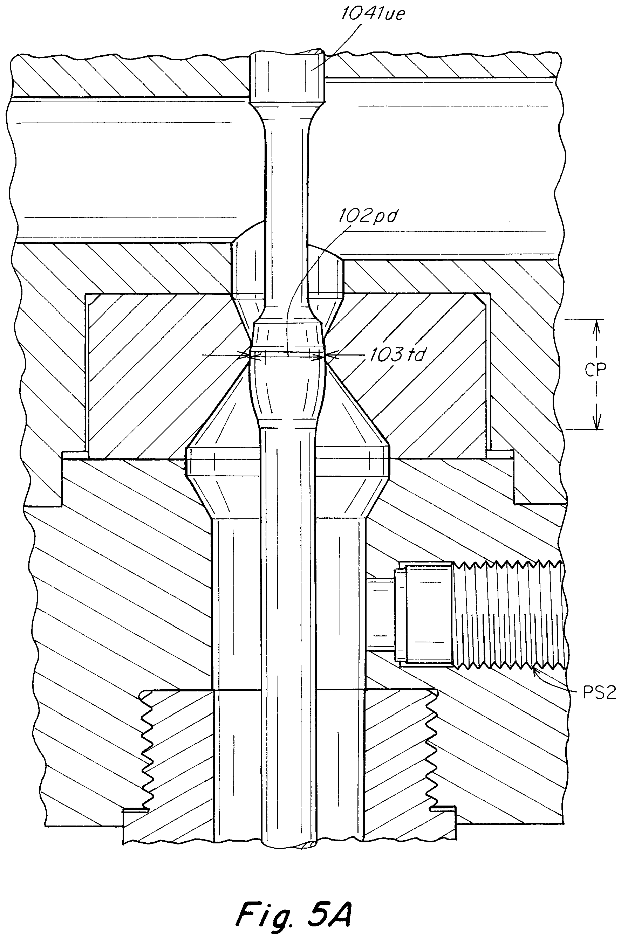

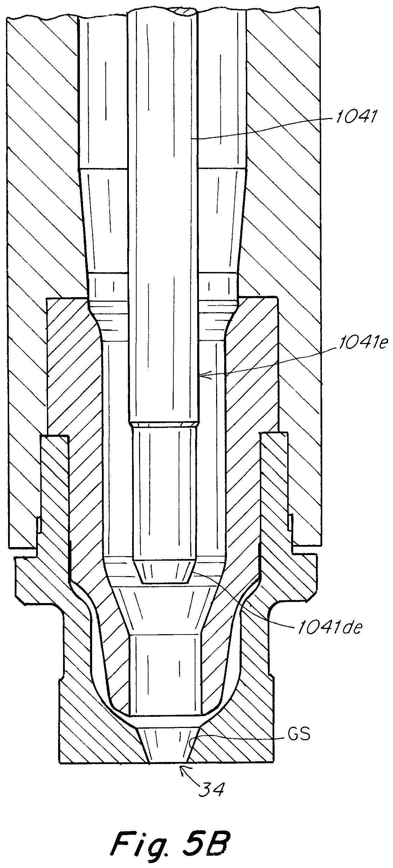

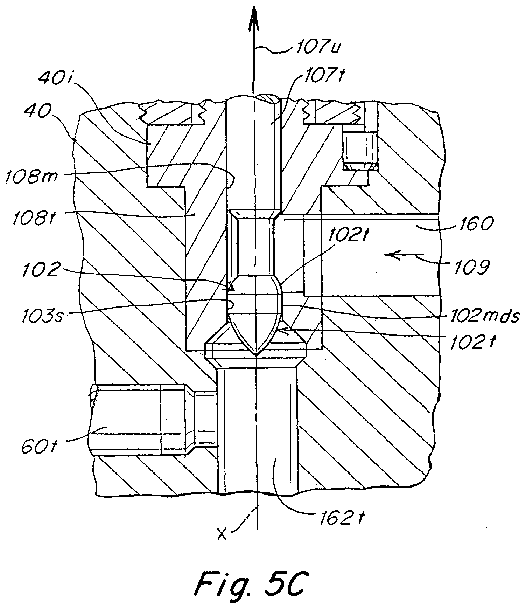

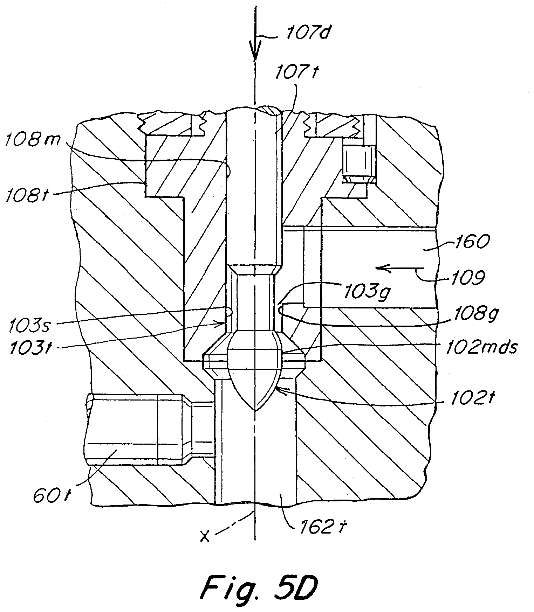

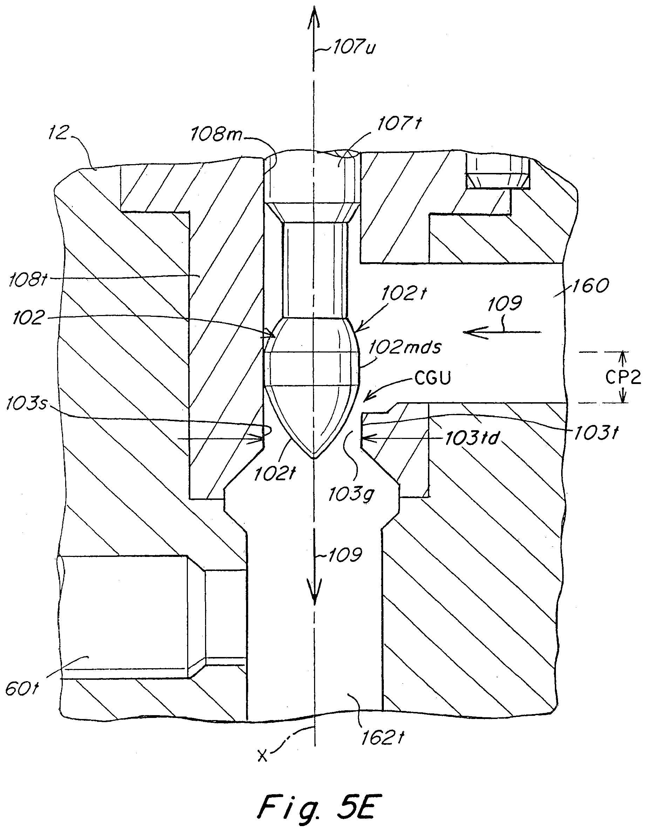

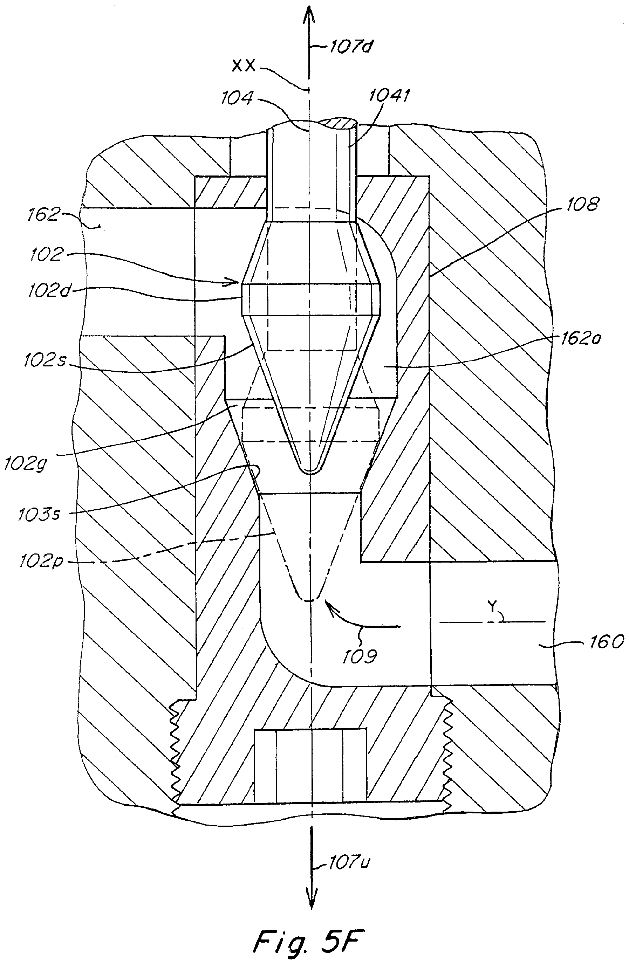

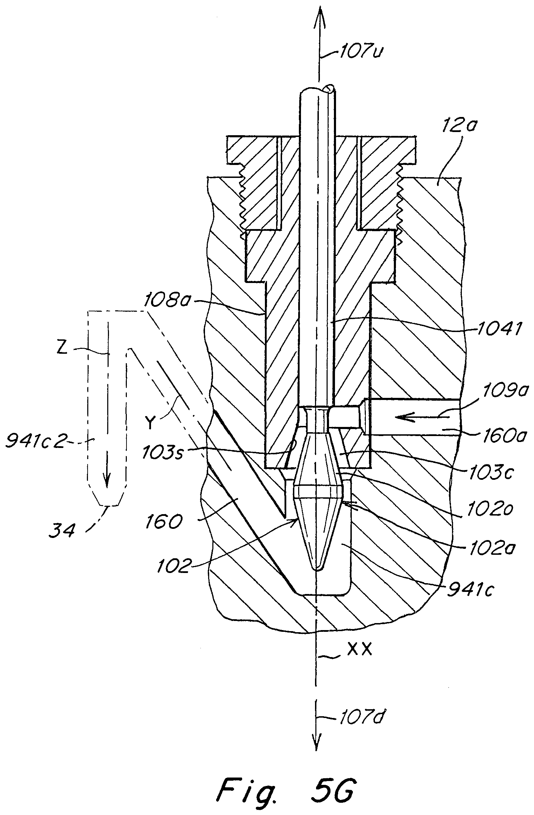

Fig. 5 is is a view similar to Fig. 3 showing the valve pin component disposed in a throat closed position relative to the position shown in Fig. 3 where the rate of flow of injection material is stopped by mating of the maximum diameter portion or circumference of the control surface 102m and the complementary inside circumferential surface 103s, and such that flow is enabled at the gate area 34 with the tip end of the valve pin being withdrawn even further upstream from the gate surface GS.
Fig. 5A is an enlarged fragmentary sectional view of the throat, control surface 102m and complementary channel surface 103s elements of the Fig. 5 subassembly.
Fig. 5B is a is enlarged fragmentary sectional view of the distal valve and nozzle or gate ends of the Fig. 5 subassembly.
Fig. 5C is an enlarged fragmentary sectional view of a portion of an elbowed flow channel formed by the mating of a bore in an insert or bushing 40i and a flow channel formed within a heated manifold 40. In this embodiment a valve pin 107t is provided having a bulb or control member 102 having a control surface 102t and a maximum diameter section having an outer circumferential surface 102mds that mates with an inside complementary surface 103s of the flow channel. In the Fig. 5C view, the valve pin is disposed in an axial position where the maximum diameter circumferential surface 102mds is aligned and mated with the complementary surface such that flow of injection material is stopped.
Fig. 5D is a view similar to Fig. 5C showing the valve pin disposed downstream of the throat section 103t relative to the Fig. 5C position in an axial position where the control surface102t of the pin is disposed in an axial position where a gap 102g is formed that restricts flow to less than a maximum flow rate that occurs when the protrusion 102 is moved fully downstream of the throat where flow is not restricted. Flow rate can be controllably varied by moving the valve pin downstream from the Fig. 5C position through a select range of downstream travel relative to the throat 103t.
Fig. 5E is a view similar to Fig. 5C showing the converse of Fig. 5D where the valve pin is disposed upstream relative to the throat 103t such that the control surface102t of the pin opens the flow channel upon upstream movement of the pin from the Fig. 5C position, and creates flow at a restricted rate over a select range of upstream path of travel by creating a restriction gap 103g upstream of the throat 103t, 103td that is restricted relative to a gap that is created when the pin is fully withdrawn upstream where the control surface 102t is in a position that enables maximum flow .
Fig. 5F is an enlarged fragmentary cross-sectional view of another embodiment of an upstream away from the gate flow control pin surface and complementary channel surface where the pin has a conically shaped outer control surface that can be controllably disposed in a range of axial travel path positions relative to a complementary conically configured interior channel surface 103s such that the size of a flow control gap 102g can be controllably varied thus enabling a varying rate of flow of injection material. In this embodiment, the linear axis of travel XX of the valve pin 1041 is non coaxial relative to the axis Y of a downstream flow channel 160 that delivers injection material from the channel 941c in which the valve pin 1041 is reciprocally driven along axis XX.
Fig. 5G is an enlarged fragmentary cross-sectional view of another embodiment of an upstream away from the gate flow control pin surface and complementary channel surface where the pin has a conically shaped outer control surface that can be controllably disposed in a range of axial travel path positions relative to a complementary conically configured interior channel surface 103s such that the size of a flow control gap 102g can be controllably varied thus enabling a varying rate of flow of injection material. In this embodiment, the linear axis of travel XX of the valve pin 1041 is non coaxial relative to the axes Y, Z of downstream flow channels 160, 941c2 that delivers injection material from the channel 941c in which the valve pin 1041 is reciprocally driven along axis XX.

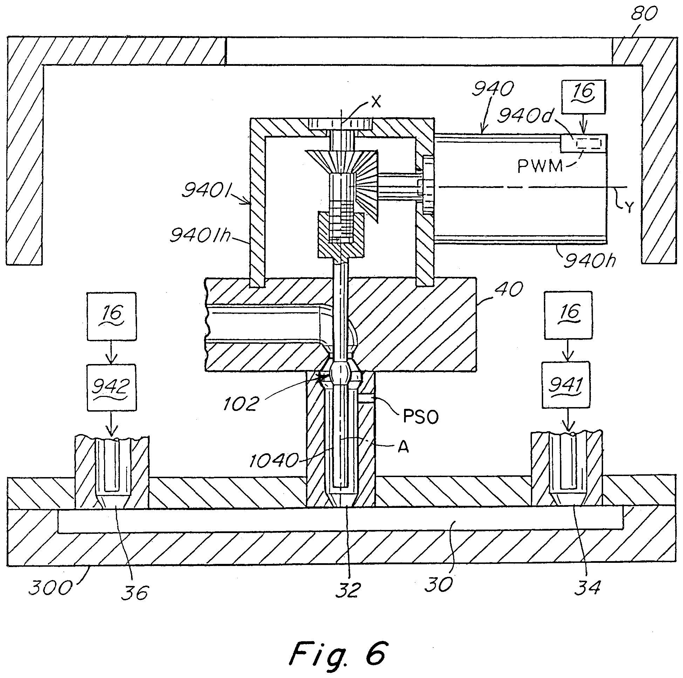

Fig. 6 is a side sectional schematic view of one embodiment of an electric actuator having an electric drive device mounted on, to or within the housing of the actuator and where the drive axis of the actuator is non coaxially arranged relative to the movement axis of the valve pin, and is interconnected to a linear travel converter, the valve pin having a flow control bulb or protrusion, complementary channel surface and controller with programming designed to enable pin position control based at least in part on matching pressure within the flow channel to a predetermined profile of pressures.

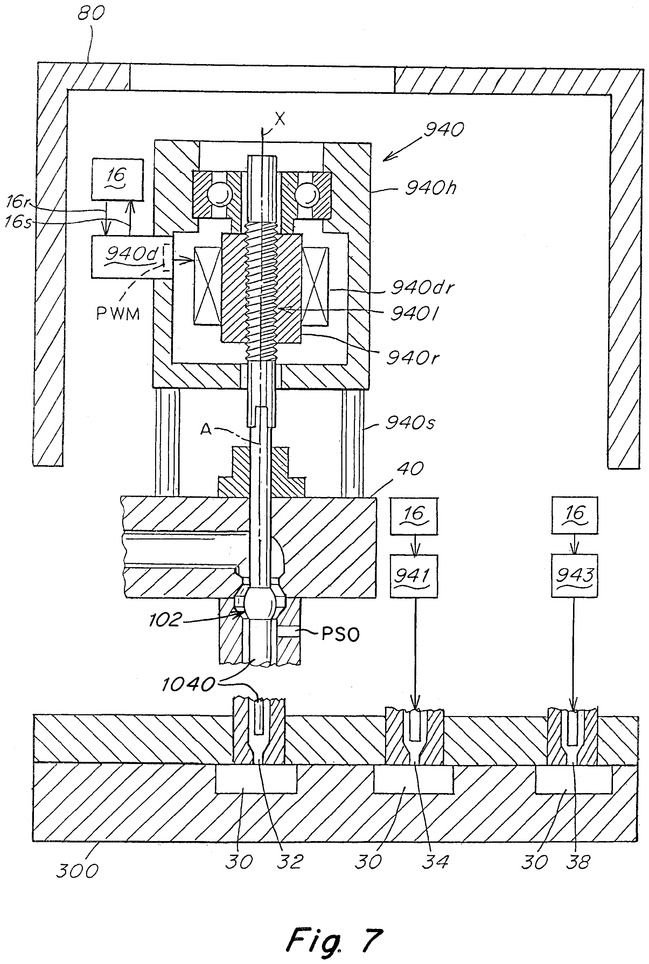

Fig. 7 is a side sectional schematic view of another embodiment of an electric actuator having an electric drive device mounted on, to or within the housing of the actuator and where the drive axis of the actuator is coaxially arranged relative to the movement axis of the valve pin, the valve pin having a flow control bulb or protrusion, complementary channel surface and a controller with programming designed to enable pin position control based at least in part on matching pressure within the flow channel to a predetermined profile of pressures.

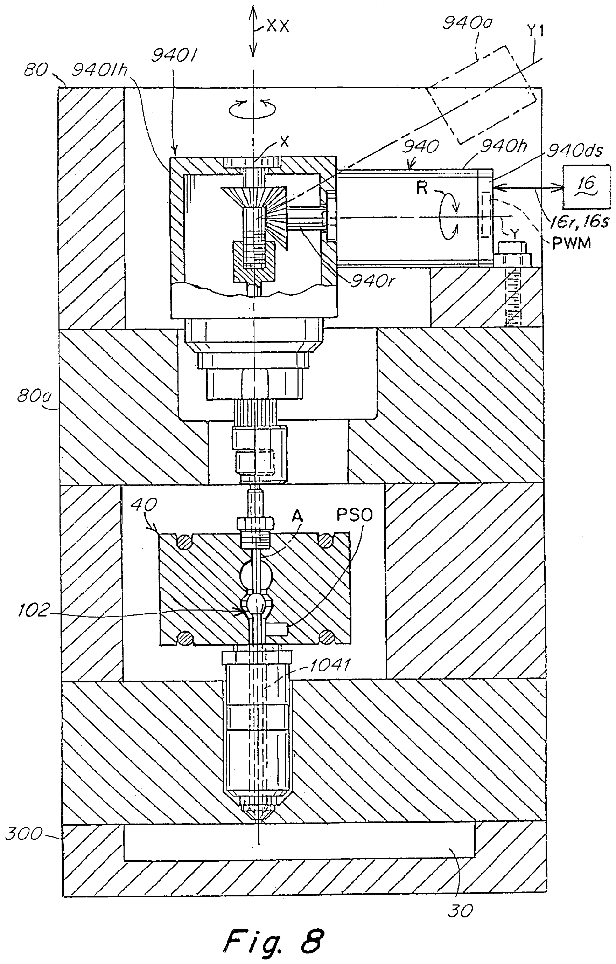

Fig. 8 is a side sectional schematic view of another embodiment of an electric actuator having an electric drive device mounted on, to or within the housing of the actuator and where the drive axis of the actuator is non coaxially arranged relative to the movement axis of the valve pin and is interconnected to a linear travel converter, the actuator housing is mounted to the top clamp plate, the valve pin having a flow control bulb or protrusion, complementary channel surface and a controller with programming designed to enable pin position control based at least in part on matching pressure within the flow channel to a predetermined profile of pressures.

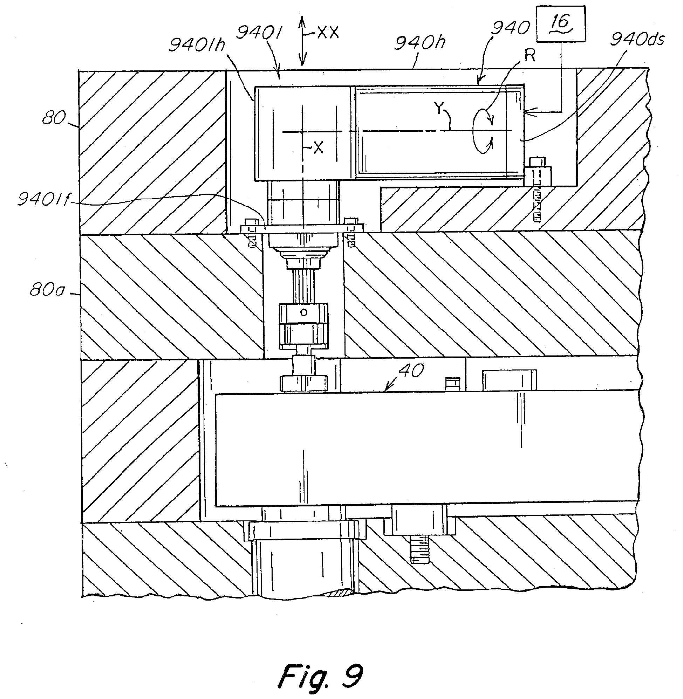

Fig. 9 is a side sectional schematic view of another embodiment of an electric actuator having an electric drive device mounted on, to or within the housing of the actuator and where the drive axis of the actuator is non coaxially arranged relative to the movement axis of the valve pin and is interconnected to a linear travel converter, the actuator housing is mounted to the linear travel converter housing which is in turn mounted to the top clamp plate, the valve pin having a flow control bulb or protrusion, complementary channel surface and a controller with programming designed to enable pin position control based at least in part on matching pressure within the flow channel to a predetermined profile of pressures.

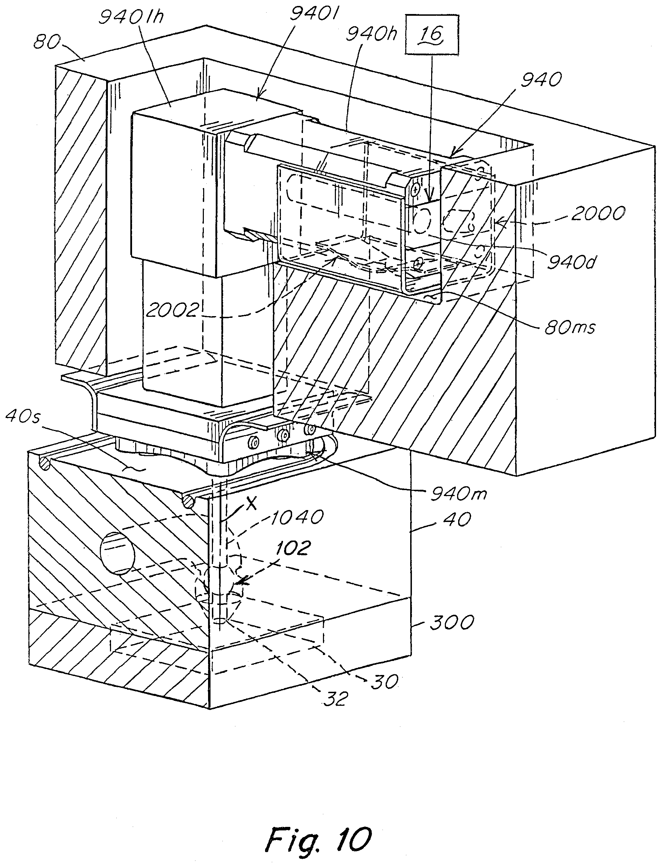

Fig. 10 is a side sectional schematic view of another embodiment of an electric actuator having an electric drive device mounted on, to or within the housing of the actuator and where the drive axis of the actuator is non coaxially arranged relative to the movement axis of the valve pin and is interconnected to a linear travel converter, the actuator housing is mounted to the top clamp plate, the valve pin having a flow control bulb or protrusion, complementary channel surface and a controller with programming designed to enable pin position control based at least in part on matching pressure within the flow channel to a predetermined profile of pressures.

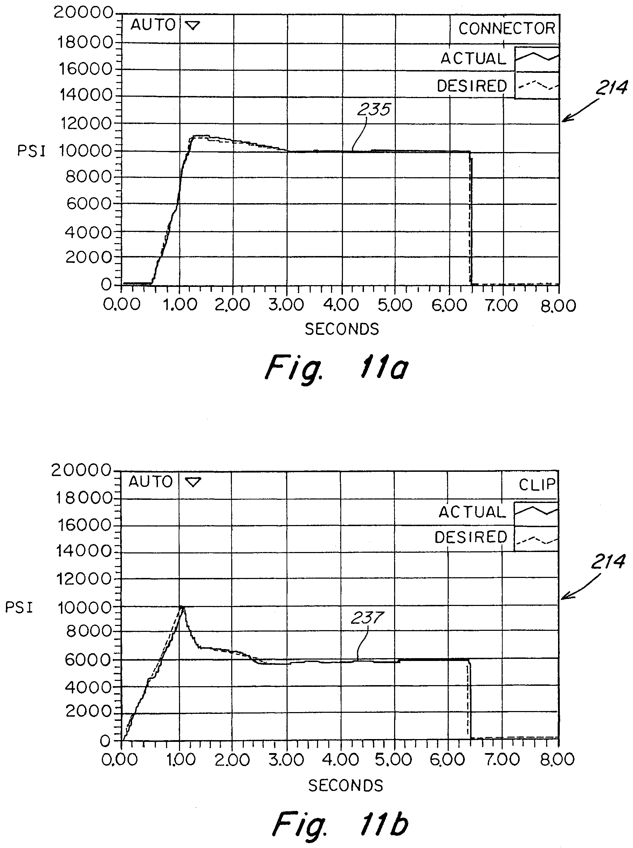

Fig. 11a is one example of an injection cycle profile of pressure of injection material measured at a position immediately downstream of the axial position within a fluid delivery channel as described herein where a control surface of a valve pin interfaces with a complementary surface of the fluid delivery channel to vary a control flow gap.
Fig. 11b is another example of a profile similar to Fig. 11a.

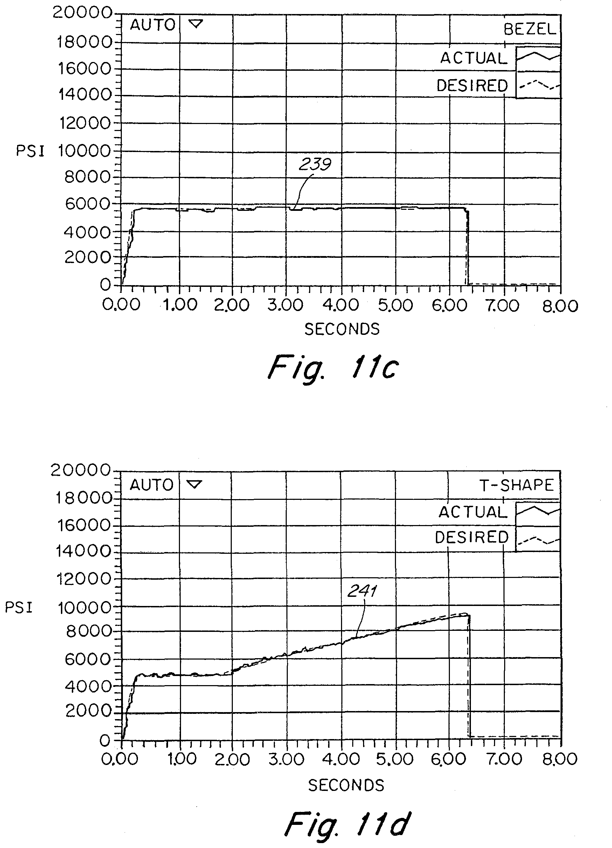

Fig. 11c is another example of a profile similar to Fig. 11a.
Fig. 11d is another example of a profile similar to Fig. 11a.

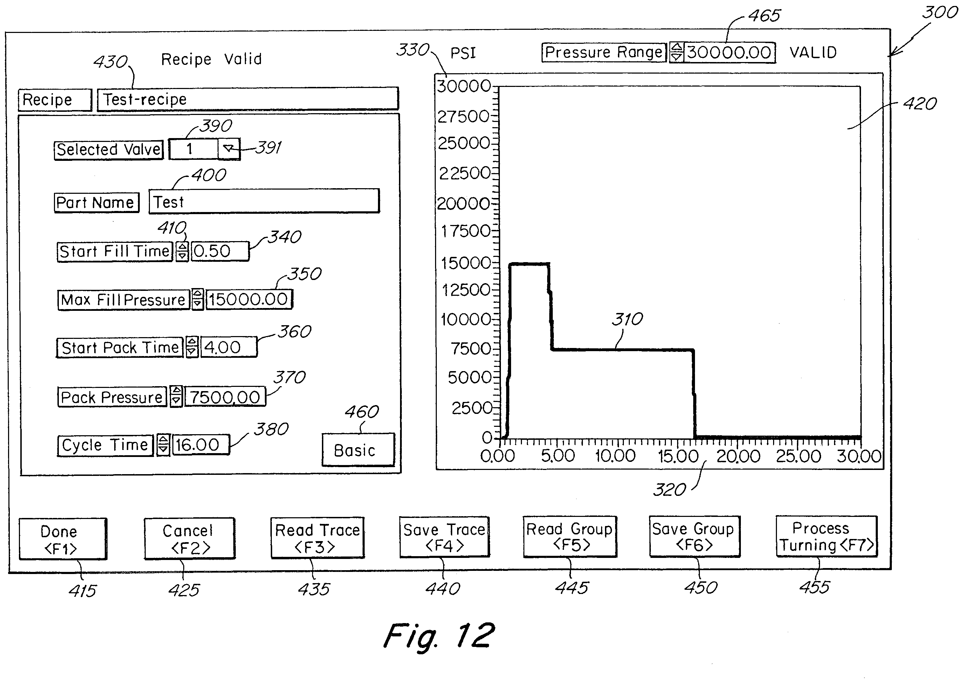

Fig. 12 is an example of a user interface displaying component and function fields that enable a user to display, use, create, edit and store target pressure profiles.

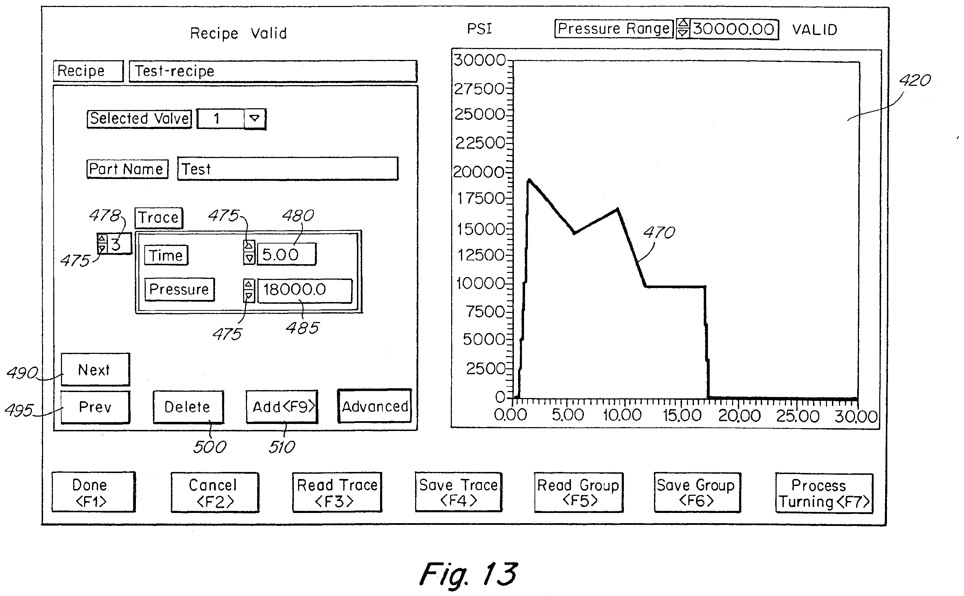

Fig. 13 is another example of a user interface displaying component and function fields that enable a user to display, use, create, edit and store target pressure profiles.

### DETAILED DESCRIPTION

Figure 1 is a schematic cross section of an injection molding system comprised of an electric or electronic actuator interconnected to a valve pin that has a flow control surface that interfaces with a surface of a flow channel at a selected position upstream of and away from the gate to control the rate of flow of injection fluid upstream of the gate during the course of an injection molding cycle, the electric or electronic actuators being interconnected to an electronic drive control device that is mounted to the housing of the electric or electronic actuator, the electronic drive control device receiving digital control and other signals from a remotely mounted controller containing a program that executes an algorithm for controlling operation of the electric or electronic actuator and the position of the valve pin within the flow channel during the course of an injection cycle.

Fig. 2 shows a sequential valve gated system showing three valves that have electric or electronic actuators that have a drive control mechanism that is integrated together with the body or housing of the actuator that houses the rotor and rotor drive components of the actuator.

FIGS. 1, 2 show exemplary embodiments of injection molding systems according to the present invention. The systems shown are multi-gate single cavity systems in which melt material 18 is injected into a cavity 5, 30 from gates 32, 34, 36. Melt material 18 is injected from the barrel 500 of an injection molding machine 13 through an extended inlet 5011 and into a heated distribution manifold 15, 40. Manifold 15, 40 distributes the melt through upstream channels 17, 19. Although a hot runner system is shown in which plastic melt is injected, the invention is applicable to other types of injection systems in which it is useful to control the rate at which a material (e.g., metallic or composite materials) is delivered to a cavity. Melt is distributed through channels 17, 19 and into bores 940c, 941c, 942c of nozzles 20, 21, 23 respectively. Melt is injected out of nozzles 20, 21, 23 and into cavities 5, 30 (where the part is formed) which is formed by mold plates 25, 27, 300. Although a multi-gate single-cavity system is shown, the invention is applicable to, for example, multi-cavity systems.

The injection nozzles 20, 21, 23 are received in respective wells formed in the mold plates. The nozzles are typically each seated in support rings that serve to align the nozzles with the gates 32, 34, 36 and insulate the nozzles from the mold. An upstream end 1041ue of the valve pins 1040, 1041, 1042 is connected to an associated actuator 14, 940, 941, 942 that operate to drive the valve pins reciprocally upstream and downstream through the delivery channels 940c, 941c, 942c. The valve pin is opened at the beginning of the injection cycle starting from a fully closed position as shown for example in Figs. 3, 3B and returned to a fully closed at the end of the cycle. During the cycle, the valve pin can assume intermediate positions between an upstream open position, in order to decrease or increase the rate of flow of the melt. In the embodiments shown, a protrusion or head 102 is disposed between an upstream end 1041ue and downstream end 1041de. The protrusion includes a tapered portion 102m that forms an adjustably variable gap CGu, CGd with a surface 103s, 103s2 of the bore of the delivery channel of the manifold. Increasing or decreasing the size of the gap by displacing the valve pin correspondingly increases or decreases the flow of melt material to the gate. The valve pins 1040, 1041, 1042 can close and stop flow of injection fluid 18 in both a select upstream position as shown for example in Figs. 5, 5A and in a fully downstream gate closed position as shown for example in Figs. 3, 3B. When the valve pin 1040, 1041, 1042 is closed in a downstream position, in the embodiment shown in Figs. 3, 3B the downstream end 1041de can be configured as a tapered portion as shown that contacts and seals with a complementary tapered gate surface GS. In alternative embodiments the gate surface can be configured in a cylindrical or other configuration to mate with a complementarily cylindrically configured distal end surface 1041de of a valve pin 940c, 941c, 942c.

Melt flow rate is related to the material pressure sensed in a flow channel. Thus, using the controller 16, the rate at which the melt flows through the gates 32, 34, 36 and into the cavities can be controllably adjusted during a given injection molding cycle, according to a predetermined desired pressure profile.

In one embodiment, Figs. 3, 3A, 3B, 4, 4A, 4B, 5, 5A, 5B, to reduce the rate or velocity of flow of melt 18, the pin 1041 can be retracted or controllably driven upstream away from the gate along a selected portion of a selected flow control path of travel CP as shown for example in Figs. 4A, 5A by an actuator 940, 941, 942 to thereby controllably decrease the width of a flow control gap CGd between the control surface 102m of the valve pin and the complementary control surface 103s of the bore of the downstream channel 940c, 941c, 942c. In this same embodiment the rate or velocity of flow of melt 18 can be controllably variably increased by controllably driving the valve pin downstream along the selected portion of a selected flow control path of travel CP.

In an alternative embodiment, the rate or velocity of flow of melt 18 can conversely be controllably increased by controllably driving the valve pin 1041, Figs. 3, 3A, 3B, 4, 4A, 4B, 5, 5A, 5B, upstream away from the gate along another selected portion of a selected flow control path of travel beginning at and extending upstream of the throat 103t to controllably increase the width of a flow control gap CGu between the control surface 102m of the valve pin and another complementary control surface of the bore of the downstream channel 940c, 941c, 942c. In this alternative embodiment the rate or velocity of flow of melt 18 can be controllably variably decreased by controllably driving the valve pin downstream along the same alternative selected portion of a selected flow control path of travel.

In the Figs 3-5B embodiments, the valve pin includes an extension (1041) extending downstream from the control surface (43, 45, 102m), the valve pin (1040, 1041, 1042) and the downstream feed channel (17, 19, 160, 940c, 941c, 942c) being configured such that in a first downstream position a distal end (1041de) of the valve pin closes the gate (32, 34, 36) and the interface between the control surface (43, 45, 102m) and the complementary surface (47, 103s) is not closed as shown in Figs 3-3B, and in a second upstream position, the distal end of the valve pin (1041de) does not close the gate (32, 34, 36) and the interface between the control surface (43, 45, 102m) and the complementary surface (47, 103s) is closed as shown in Fig. 5-5B.

A material pressure transducer or sensor PS1, PS2, PS1a, PS2a can be used to sense the pressure of the injection material 18 either in the delivery channel 940c, 941c, 942c or within a fluid flow channel 17, 19 disposed within the manifold 40 or within a bushing 940b1, 940b2 having a fluid delivery channel that communicates with the downstream fluid delivery channel 940c, 941c, 942c.

In operation, the material 18 pressure is sensed by a pressure sensor PS0, PS0a, PS1, PS2, PS1a, PS2a associated with each nozzle and is communicated in real time to a control system or controller 16. The controller 16 receives the pressure signals, compares them to a predetermined profile of pressures over the course of an injection cycle and sends drive signals DC to the electrical drives 940d, 941d, 942d that controllably distributes electrical energy or power in controllably varied amounts according to the drive signals (DC) to the drivers 940dr, 941dr, 942dr that drive the rotors of the electric actuators. The controller includes a processor and instructions that generate drive signals DC that result in the valve pin 1040, 1041, 1042 being driven upstream or downstream within a fluid delivery channel 940c, 941c, 942c to select positions during the course of an injection cycle so as to cause the pressure of the material 18 as measured in real time by the sensors PS0, PS1, PS2 to be adjusted to match or track the predetermined profile of preferred cycle material pressures such as in the examples described with reference to Figs. 11-13.

Figs. 5C-5E show an alternative melt flow controller embodiment in which a pin 107t is slidably mounted in a mounting channel 108m having a protrusion or bulbous portion 102 without a downstream needle extension that can close the gate 34. In such an embodiment, the control surface (43, 45, 102m and complementary surface of the flow channel disposed upstream and away from the gate is the sole mechanism by which fluid flow is stopped at both the beginning and end of an injection cycle by positioning the pin 107t at a position as shown in Fig. 5C. As with the control surface 43, 45, 102m of Figs. 5-5C, the control surface 43, 45, 102m of Figs. 5C-5E has a diameter equal to the maximum diameter of midsection 102md of the fluid contacting member 102 such that the pin 107t can be entirely withdrawn in the direction 107u from the manifold and bushing 108t and readily replaced without disassembling any portion of the manifold or bushing 108t. The maximum diameter midsection 102md typically has the same or about the same diameter as the complementary flow restricting throat surface 103s of the bushing 108t such that when the two surfaces mate flow is stopped.

In the specific examples described herein, the control surface 43, 45, 102m is illustrated as circular circumferential surface of a bulb or bulbous protrusion 102. The control surface 43, 45, 102m and its complementary channel surface 47, 103s can be configured to have any geometrical shape such as square, hexagonal, oval or the like other than circular as long as the two surfaces can mate or engage each other such that flow of injection material is stopped when the two surfaces mate or engage with each other.

As shown in Figs. 5D, 5E, the rate of flow and the size of the flow rate determining gap 103g can be controllably varied by either upstream movement 107u, Fig. 5E or downstream movement, 107d, Fig. 5D of pin 107t. Upstream movement 107u can form gap 103g between bushing surface 108g, Fig. 5E, and the lower outer control surface 102t of member 102. Downstream movement 107d, Fig. 5D, can also form a gap 103g between channel surfaces 103s, 108g and the upper portion of the outer control surface 102t of member 102. As described above, controlled movement of pin 107t by controller 16 controls the size of the gap 103g and thus the rate of flow from upstream channel 160 to downstream channel 162t which leads to downstream channel 190 or 200 or the like. Axis X of pin 107t as shown in Figs. 5D-5F is not coaxial with the axis of the downstream bore or flow channel such as channel 940c, 941c, 942c that leads at its distal end to a gate such as gate 32, 34, 36.

Fig. 5F shows another embodiment of a valve having a pin that is non coaxially arranged relative to the axis of a downstream channel that delivers fluid to a gate of a cavity of a mold. In the Fig. 5F embodiment the valve pin 107 has a protrusion 102 with an outside surface 102s which is complementary to a mating surface 103 disposed downstream of the protrusion within the flow channel 160. When the two surfaces mate, i.e. when the member 102 is in the position 102p in dashed lines in Fig. 5F, flow is stopped. Between the 102p position and the solid line 102 position shown in Fig. 2, the gap 102g varies in size and the rate of fluid flow varies depending on the size of the gap. In this embodiment, the fluid flow rate decreases on forward upstream movement 107u of pin 107. Upstream movement of a fluid contacting member, pin or the like means that the member moves against or in the opposite direction of the flow of the fluid. Downstream movement means that the member moves in the same direction as the flow of fluid. Upstream movement to decrease and/or stop flow rate is typically preferred. In the Fig. 5F embodiment, the rate of flow is increased by upstream movement of the fluid contacting member 102 and decreased by downstream movement. And, the position at which fluid flow rate is controlled is located within a channel 162a having an axis such as 104 which is not coaxial with the downstream channels 941c (not shown) that have an axis that intersects a gate leading to a mold cavity.

The embodiments described control the rate of melt flow away from the gate along a channel axis offset from a channel having an axis intersecting and leading to a gate thus enabling control of flow rate to multiple channels intersecting multiple gates. Controlling the melt flow away from the gate also enables a pressure or other material condition sensor to be located away from a gate.

In the Figs. 3, 3A, 3B, 4, 4A, 4B, 5, 5A, 5B, 5C, 5D, 5E embodiments, the diameter 103td of the throat surface 103ts that is intended to mate with a complementary mating outer circumferential surface 102md, 102mds of the pin 1041 has a maximum diameter of about 10 to 12 mm and preferably a maximum diameter of about 8 to 9 mm such that upstream reactive forces exerted by the injection fluid on the pin and upstream to the motor rotor are minimized thus enabling use of a smaller sized electric motor actuator. In the Figs. 5-5E embodiments, the diameter 102pd of the mating surface 102mds of the pin 1041 is preferably adapted to be the same or about the same as the diameter 103td of the flow control throat surface 103ts such that when the pin 1041 is positioned in a position where the mating surface 102mds is axially aligned with the maximum diameter throat surface 103ts, injection material flow through the throat 103t, and thus through the gate 34, is stopped or substantially stopped.

The controller 16 typically comprises for example a PID controller and a CPU. The CPU can execute a PID (proportional, integral, derivative) algorithm which compares the sensed pressure (at a given time) from the pressure sensor or transducer to a target pressure (for the given time). The CPU instructs the PID controller to adjust the position of the valve pin 1040, 1041, 1042 to mirror the target pressure for that given time by instructing the electric actuator via communication of control drive signals DC through the electrical drive 940d, 941d, 942d.

Although in the disclosed embodiments the sensed condition is preferably pressure, other sensed conditions can be used which relate to melt flow rate. For example, the position of the valve pin. Pressure is typically measured by a pressure transducer that measures pressure of the injection material directly or indirectly such as via measurement of the load on the valve pin via a load sensor. Alternatively a position sensor could be used to feed back the sensed condition (position) to the PID controller. In the same manner as explained above, the CPU would use a PID algorithm to compare the sensed condition to a programmed target position profile or load profile for the particular gate to the mold cavity, and adjust the valve pin accordingly.

Where a position sensor is used to generate a signal indicative of the position of the pin, a sensor that senses position of the valve pin directly can be used such as a Hall Effect sensor or a light sensor. Alternatively, a sensor that detects position of the rotor of the electric actuator, such as an encoder, could be used to generate a position signal that is indicative of the position of the valve pin.

As used in this application with regard to various monitoring and control systems, the terms "controller," "component," "computer" and the like are intended to refer to a computer-related entity, either hardware, a combination of hardware and software, software, or software in execution. For example, a component or controller may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

Claimed methods of the present invention may also be illustrated as a flow chart of a process of the invention. While, for the purposes of simplicity of explanation, the one or more methodologies shown in the form of a flow chart are described as a series of acts, it is to be understood and appreciated that the present invention is not limited by the order of acts, as some acts may, in accordance with the present invention, occur in a different order and/or concurrent with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

In various embodiments of the invention disclosed herein, the term "data" or the like means any sequence of symbols (typically denoted "0" and "1") that can be input into a computer, stored and processed there, or transmitted to another computer. As used herein, data includes metadata, a description of other data. Data written to storage may be data elements of the same size, or data elements of variable sizes. Some examples of data include information, program code, program state, program data, other data, and the like.

As used herein, computer storage media or the like includes both volatile and non-volatile, removable and non-removable media for storage of information such as computer-readable instructions, data structures, program modules, or other data. Computer storage media includes RAM, ROM, EEPROM, FLASH memory or other memory technology, CD-ROM, digital versatile disc (DVDs) or other optical disk storage, magnetic cassettes, magnetic tape, magnetic disk storage or other magnetic storage devices, or any other medium which can be used to store desired information and which can be accessed by the computer.

The methods described herein may be implemented in a suitable computing and storage environment, e.g., in the context of computer-executable instructions that may run on one or more processors, microcontrollers or other computers. In a distributed computing environment (for example) certain tasks are performed by remote processing devices that are linked through a communications network and program modules may be located in both local and remote memory storage devices. The communications network may include a global area network, e.g., the Internet, a local area network, a wide area network or other computer network. It will be appreciated that the network connections described herein are exemplary and other means of establishing communications between the computers may be used.

A computer may include one or more processors and memory, e.g., a processing unit, a system memory, and system bus, wherein the system bus couples the system components including, but not limited to, the system memory and the processing unit. A computer may further include disk drives and interfaces to external components. A variety of computer-readable media can be accessed by the computer and includes both volatile and nonvolatile media, removable and nonremovable media. A computer may include various user interface devices including a display screen, touch screen, keyboard or mouse.

A "controller," as used herein also refers to electrical and electronic control apparatus that comprise a single box or multiple boxes (typically interconnected and communicating with each other) that contain(s) all of the separate electronic processing, memory and electrical signal generating components that are necessary or desirable for carrying out and constructing the methods, functions and apparatuses described herein. Such electronic and electrical components include programs, microprocessors, computers, PID controllers, voltage regulators, current regulators, circuit boards, motors, batteries and instructions for controlling any variable element discussed herein such as length of time, degree of electrical signal output and the like. For example a component of a controller, as that term is used herein, includes programs, controllers and the like that perform functions such as monitoring, alerting and initiating an injection molding cycle including a control device that is used as a standalone device for performing conventional functions such as signaling and instructing an individual injection valve or a series of interdependent valves to start an injection, namely move an actuator and associated valve pin from a gate closed to a gate open position. In addition, although fluid driven actuators are employed in typical or preferred embodiments of the invention, actuators powered by an electric or electronic motor or drive source can alternatively be used as the actuator component.

The injection molding machine IMM, 500, 13 typically includes its own internal manufacturer supplied machine controller that generates standardized beginning of cycle gate closed and end of cycle gate open and gate closed machine voltage signals VS typically 0 volts for gate open and 24 volts for gate open (or 0 volts and 120 volts respectively). The standardized machine voltage signals VS can be sent to a signal conversion device that converts the injection machine voltage signals to a signal usable by the controller 16 and the electric drive (940d, 941d, 942d) of an electric actuator to cause the electric actuator to move the valve pin to a gate closed or gate open actuator position. The controller (16) can utilize these start and end of injection cycle signals together with position signals (POS0s, POS1s, POS2s) that are indicative of position of the valve pin 1040, 1041, 1042 that are generated by a position sensor (POS0, POS1, POS2), to instruct an electric actuator (940, 941, 942) to drive or move a valve pin to one or more predetermined positions such as a start or end cycle position. Or the position signals can be used by the controller to instruct the actuator to move or drive the valve pin to another intermediate position during the course of an injection cycle such as a position at which the pin serves to control rate of injection fluid flow or injection material pressure such that the injection material is held at a "pack" phase pressure for a predetermined period of time prior to the end of the cycle when the gate to the cavity is closed.

The position sensor signals POS0s, POS1s, POS2s and their associated position sensors POS, PS0, PS1, PS2, PSOa, PS1a, PS2a can also be used as an input to a set of instructions included in the program contained in controller 16 that operates to correct or adjust axial position of the valve pin 1040, 1041, 1042 by a predetermined degree either upstream or downstream depending on the difference between the value of the target or predetermined pressure profile and the value of the real time pressure sensed at any given point in time during the injection cycle. The degree of adjustment or correction in axial positioning of the valve pin, and thus the precise positioning of the axial positioning of control surface 102m, 102t is the degree or amount of travel distance that is required to reduce or increase the real time pressure to match or to approach the value of the predetermined target pressure at any given point in time during the course of the injection cycle. This degree of adjustment distance is predetermined and is input to the program as a variable that is utilized in the control program to send movement adjustment signals from the controller 16 to the electric drive 940d, 941d, 942d for an actuator. The goal of the program is to instruct the actuators to drive the valve pins to an axial position over the course of the entire injection cycle that produces a sensed or real time injection material pressure that matches the predetermined profile of target pressures as closely as possible.

The program contained within the controller (16) preferably includes instructions that utilize a position signal POS0s, POS1s, POS2s to instruct an actuator (14, 940, 941, 942) to move a corresponding valve pin (1040, 1041, 1042) to one or more predetermined positions during the course of an injection cycle that can include one or more of (a) an initial position of the valve pin (1040, 1041, 1042) at start of the injection cycle, (b) an end position of the valve pin at the end of the injection cycle, and (c) one or more intermediate positions of the valve pin between the initial position and the end position.

The program can include instructions that utilize the position signal (POS0s, POS1s, POS2s) to adjust sensed axial position of the valve pin by a travel distance or amount that causes the control surface (102m, 102t) to adjust real time pressure of the injection material at one or more times over the course of the injection cycle to a value that approaches or matches a predetermined target pressure value for the one or more times over the course of the injection cycle.

The program can include instructions that utilize a predetermined error value to determine the travel distance. The predetermined error value typically corresponds or is proportional to one or more of (a) an error in accuracy of the value of sensed pressure and (b) a difference in value between sensed pressure and the predetermined target pressure.

Figs. 11a, 11b, 11c, 11d show time versus pressure graphs (235, 237, 239, 241) of the pressure detected by four pressure transducers associated with four nozzles mounted in a manifold block (not shown). The four nozzles can be substantially similar to or the same as the nozzles shown in FIGS. 1-5C and include pressure transducers interconnected to a controller 16 as described herein. The Figs. 11a-d plots are generated on a user interface 214 so that a user can observe the tracking of the actual pressure versus the target pressure during the injection cycle in real time, or after the cycle is complete. The four different graphs of Figs. 11a-11d show as an example four independent target pressure profiles ("desired") emulated by the four individual nozzles. Different target profiles are desirable to uniformly fill different sized individual cavities associated with each nozzle, or to uniformly fill different sized sections of a single cavity. Graphs such as these can be generated with respect to any of the previous embodiments described herein.

In the Figs. 11a-11d example, the valve pin associated with plot 235 is opened sequentially at 0.5 seconds after the valves associated with the other three graphs (237, 239 and 241) were opened at 0.00 seconds. In a system employing a pin configured with a flow control protrusion such as 102 and associated flow control bore surface such as 103s that are disposed upstream and away from the gate together with an extended needle portion such as extension 1041e, just before the pin is opened at the beginning of the cycle, the valve pins are in the position shown in Figs. 5, 5A, 5B such that flow is stopped at the throat 103t. At approximately 6.25 seconds at the end of the injection cycle all four valve pins are in the position shown in Figs. 3, 3A, 3B where flow of injection material is stopped by the mating of the tip end 1041de with the gate surface GS at the gate 34. During injection (for example, 0.00 to 1.0 seconds in FIG. 11b) and pack (for example, 1.0 to 6.25 seconds in FIG. 11b) portions of the plots, each valve pin is controlled to a plurality of positions such as Figs. 4, 4A, 4B between the Figs. 3 and 5 to alter the pressure sensed by the pressure transducer PS0, PS1, PS1a, PS2, PS2a associated with each valve to track the target pressure.

Through the user interface 214, target profiles can be designed, and changes can be made to any of the target profiles using standard windows based editing techniques. The profiles are then input to memory and used by controller 16 to control the position of the valve pin. For example, FIG. 12 shows an example of a profile creation and editing screen icon 300 generated on interface 214.

Screen icon 300 is generated by a windows-based application performed on interface 214. Alternatively, this icon could be generated on an interface associated with controller 6. Screen icon 300 provides a user with the ability to create a new target profile or edit an existing target profile for any given nozzle and cavity associated therewith. A profile 310 includes (x, y) data pairs, corresponding to time values 320 and pressure values 330 which represent the desired pressure sensed by the pressure transducer for the particular nozzle being profiled. The screen icon shown in FIG. 12 is shown in a "basic" mode in which a limited group of parameters are entered to generate a profile. For example, in the foregoing embodiment, the "basic" mode permits a user to input start time displayed at 340, maximum fill pressure displayed at 350 (also known as injection pressure), the start of pack time displayed at 360, the pack pressure displayed at 370, and the total cycle time displayed at 380.

The screen also allows the user to select the particular valve pin they are controlling displayed at 390, and name the part being molded displayed at 400. Each of these parameters can be adjusted independently using standard windows-based editing techniques such as using a cursor to actuate up/down arrows 410, or by simply typing in values on a keyboard. As these parameters are entered and modified, the profile will be displayed on a graph 420 according to the parameters selected at that time.

By clicking on a pull-down menu arrow 391, the user can select different nozzle valves in order to create, view or edit a profile for the selected nozzle valve and cavity associated therewith. Also, a part name 400 can be entered and displayed for each selected nozzle valve.

The newly edited profile can be saved in computer memory individually, or saved as a group of profiles for a group of nozzles that inject into a particular single or multi-cavity mold. The term "recipe" is used to describe a group of profiles for a particular mold and the name of the particular recipe is displayed at 430 on the screen icon.

To create a new profile or edit an existing profile, first the user selects a particular nozzle valve of the group of valves for the particular recipe group being profiled. The valve selection is displayed at 390. The user inputs an alpha/numeric name to be associated with the profile being created, for family tool molds this may be called a part name displayed at 400. The user then inputs a time displayed at 340 to specify when injection starts. A delay can be with particular valve pins to sequence the opening of the valve pins and the injection of melt material into different gates of a mold.

The user then inputs the fill (injection) pressure displayed at 350. In the basic mode, the ramp from zero pressure to max fill pressure is a fixed time, for example, 0.3 seconds. The user next inputs the start pack time to indicate when the pack phase of the injection cycle starts. The ramp from the filling phase to the packing phase is also fixed time in the basic mode, for example, 0.3 seconds.

The final parameter is the cycle time which is displayed at 380 in which the user specifies when the pack phase (and the injection cycle) ends. The ramp from the pack phase to zero pressure will be instantaneous when a valve pin is used to close the gate, as in the embodiment of FIG. 13, or slower in a thermal gate (see FIG. 1) due to the residual pressure in the cavity which will decay to zero pressure once the part solidifies in the mold cavity.

User input buttons 415 through 455 are used to save and load target profiles. Button 415 permits the user to close the screen. When this button is clicked, the current group of profiles will take effect for the recipe being profiled. Cancel button 425 is used to ignore current profile changes and revert back to the original profiles and close the screen. Read Trace button 435 is used to load an existing and saved target profile from memory. The profiles can be stored in memory contained in the interface 215 or the controller 210. Save trace button 440 is used to save the current profile. Read group button 445 is used to load an existing recipe group. Save group button 450 is used to save the current group of target profiles for a group of nozzle valve pins. The process tuning button 455allows the user to change the PID settings (for example, the gains) for a particular nozzle valve in a control zone. Also displayed is a pressure range 465 for the injection molding application.

Button 460 permits the user to toggle to an "advanced" mode profile creation and editing screen. The advanced profile creation and editing screen is shown in FIG. 13. The advanced mode allows a greater number of profile points to be inserted, edited, or deleted than the basic mode. As in the basic mode, as the profile is changed, the resulting profile is displayed. The advanced mode offers greater profilability because the user can select values for individual time and pressure data pairs. As shown in the graph 420, the profile 470 displayed is not limited to a single pressure for fill and pack, respectively, as in the basic mode. In the advanced mode, individual (x, y) data pairs (time and pressure) can be selected anywhere during the injection cycle.

To create and edit a profile using advanced mode, the user can select a plurality of times during the injection cycle (for example 16 different times), and select a pressure value for each selected time. Using standard windows-based editing techniques (arrows 475) the user assigns consecutive points along the profile (displayed at 478), particular time values displayed at 480 and particular pressure values displayed at 485.

The button 490 is used to select the next point on the profile for editing. Prev button 495 is used to select the previous point on the profile for editing. Delete button 500 is used for deleting the currently selected point. When the delete button is used the two adjacent points will be redrawn showing one straight line segment.

The add button 510 is used to add a new point after the currently selected point in which time and pressure values are entered for the new point. When the add button is used the two adjacent points will be redrawn showing two segments connecting to the new point.

## Claims

1. An injection molding apparatus (1) comprising: an injection molding machine (500), a manifold (15) that receives an injection material (18) under pressure from the injection molding machine (500), a mold (25, 27, 300) having a cavity (5, 30) and at least one valve comprising:
an actuator (14, 940, 941, 942) comprising a rotor (940r, 941r, 942r) controllably rotatable by electric power, the actuator (14, 940, 941, 942) being interconnected to a controller (16) that generates drive signals (DC),
an electrical drive device (940d, 941d, 942d) comprising an interface that receives the drive signals (DC) and controllably distributes electrical energy or power in controllably varied amounts according to the drive signals (DC) to a driver (940dr, 941dr, 942dr) that drives the rotor (940r, 941r, 942r),
a valve pin (1040, 1041, 1042) comprising a shaft having an axis (X) and a control surface (43, 45, 102m) disposed at a selected position along the axis (X) of the shaft, the valve pin being interconnected at an upstream end to the rotor in an arrangement wherein the valve pin is controllably drivable along a linear path of travel (XX) upstream and downstream through a downstream feed channel (17, 19, 160, 940c, 941c, 942c) that routes the injection material to and through a gate (7, 9, 32, 34, 36) leading to the cavity of the mold,
the downstream feed channel having a complementary surface (47, 103s) adapted to interface with the control surface (43, 45, 102m) to controllably vary rate or velocity of flow according to controlled axial positioning of the control surface (43, 45, 102m) relative to the complementary surface (47, 103s) of the downstream feed channel (17, 19, 160, 940c, 941c, 942c).

2. The apparatus of claim 1 wherein the complementary surface (47, 103s) is disposed upstream and away from the gate (7, 9, 32, 34, 36).

3. Apparatus according any of the foregoing claims wherein the electrical drive device (940d, 941d, 942d) receives electrical energy or power from a power source (PS) and controllably distributes the received electrical energy or power in controllably varied amounts during the course of an injection cycle to the driver (940dr, 941dr, 942dr).

4. Apparatus according to any of the foregoing claims wherein the electrical drive device (940d, 941d, 942d) includes a pulse-width modulator (PWM) that converts received electrical energy or power into sinusoidal voltage waveforms, each sinusoidal voltage waveform being adapted to drive a corresponding phase-coil of the actuator driver (940dr, 941dr, 942dr).

5. An apparatus according to claim 4,
wherein the pulse-width modulator (PWM) comprises an inverter or a comparator; and/or
wherein the pulse width modulator (PWM) comprises a three-phase inverter that converts electrical energy or power received from the interface into three sinusoidal voltage waveforms, each one of the three sinusoidal voltage waveforms being adapted to drive a corresponding one of three phase-coils of the actuator driver; and/or
wherein the electrical energy or power received at or by the pulse width modulator (PWM) comprises a DC bus voltage.

6. An apparatus according to each of the foregoing claims,
wherein the interface of the electrical drive (940d, 941d, 942d) is adapted to receive one or more control signals from a controller (16) of the injection molding apparatus (1) and to convert electrical energy or power received from the power source (PS) into sinusoidal waveforms based on the one or more control signals; and/or
wherein the interface is comprised of the pulse width modulator (PWM) which converts electrical energy or power received from the power source into sinusoidal waveforms based on the one or more control signals.

7. An apparatus according to each of the foregoing claims,
wherein the one or more control signals received by the interface contain control information causing the pulse width modulator (PWM) to convert the received electrical energy or power into sinusoidal waveforms adapted to drive the corresponding phase-coils of the actuator driver to adjust one or more of a position, a velocity or torque of the actuator rotor (940r, 941r, 942r); and/or
wherein the one or more control signals comprise analog electrical signals received at the electrical drive from the controller (16).

8. An apparatus according to each of the foregoing claims wherein the electrical drive (940d, 941d, 942d) comprises one or the other or both of a digital signal receiving (16r) and transmitting (16s) device, wherein: the digital signal receiving and transmitting device is adapted to receive (16r) and transmit (16s) digital signals between the electrical drive (940d, 941d, 942d) and the controller (16) of the injection molding apparatus (1); and wherein, the digital signals include the one or more control signals, where the one or more control signals are digital control signals received from the controller,
wherein preferably the digital control signals include one or more of differential position commands, differential current commands, and differential velocity commands.

9. An apparatus according to claim 8 wherein the digital signal receiving and transmitting device (16r, 16s) is adapted to receive digital signals from the actuator, wherein: the digital signals received from the actuator include one or more feedback signals corresponding to operation of one or more of the actuator and the actuator rotor, wherein
the digital signal receiving and transmitting device (16r, 16s) is adapted to transmit to the controller (16) a position signal (16s) indicative of a position of the valve pin, and/or
the pulse width modulator (PWM) converts the electrical energy or power received from the interface into sinusoidal waveforms adapted to drive the corresponding phase-coils of the actuator driver based at least in part on the one or more feedback signals, and/or
the one or more feedback signals received from the actuator includes one or more of an incremental feedback signal and an absolute feedback signal.

10. An apparatus according to each of the foregoing claims wherein the actuator has a housing (940h, 941h, 942h) that houses the rotor (940r, 941r, 942r) and the driver (940dr, 941dr, 942dr), the housing being adapted to support the rotor (940r, 941r, 942r),
the electrical drive device (940d, 941d, 942d) being housed within or by the housing (940h, 941h, 942h) or being mounted on or to the housing (940h, 941h, 942h), wherein the housing (940h, 941h, 942h) is mounted in proximity or disposition relative to the heated manifold (40) such that one or the other or both of the housing (940h, 941h, 942h) and the electrical drive (940d, 941d, 942d) is or are in substantial heat communication or contact with the heated manifold (40).

11. An apparatus according to claim 10 wherein the housing (940h, 941h, 942h) is mounted on or to a clamping plate (80) in an arrangement such that one or the other or both of the housing (940h, 941h, 942h) and the electrical drive (940d, 941d, 942d) are in substantial heat or thermal communication with the heated manifold (40).

12. An apparatus according to claim 10 or claim 11 wherein the housing (940h, 941h, 942h) of the actuator is interconnected to a linear travel converter (940l, 941l, 942I) in an arrangement wherein the valve pin (1040, 1041, 1042) is adapted to be driven along a linear axis (X) that is non coaxial relative to the drive axis (y), the linear travel converter (940l, 941l, 942l) being mounted on or to or disposed in heat conductive communication with the heated manifold (40).

13. An apparatus according to claim 12,
wherein the linear travel converter (940I, 941l, 942I) is mounted on or to one or the other or both of the heated manifold (40) or a clamping plate (80); and/or
wherein the linear travel converter includes a converter housing (940lh) mounted in direct or indirect heat conductive contact to the heated manifold (40), the housing (940h, 941h, 942h) being connected to the converter housing (940lh) in thermally conductive contact therewith; and/or
wherein the linear travel converter includes a converter housing (940lh) mounted on or to mounts comprised of a metal material that are mounted in direct metal to metal contact or communication with the heated manifold (40).

14. Apparatus according to each of the foregoing claims wherein the valve pin (1040, 1041, 1042) has an upstream end (1041ue) coupled to the actuator, a downstream end (1041de) that closes the gate on downstream movement of the valve pin to a gate closed position, the control surface (43, 45, 102m) being disposed in a selected axial position intermediate the upstream (1041ue) and downstream ends (1041de) that is adapted to interact with the complementary surface (103s) to decrease rate of material flow on upstream movement of the valve pin through a selected path of travel (CP) and to increase rate of material flow on downstream movement of the valve pin through the selected path of travel (CP).

15. Apparatus according to any of the foregoing claims further comprising a sensor (PSO, PS1, PS1a, PS2, PS2a) that senses pressure of the injection material, the sensor (PSO, PS1, PS1a, PS2, PS2a) sending a signal indicative of sensed pressure to the controller (16), the controller including instructions that compare the sensed pressure to a target pressure and adjust axial position of the valve pin such that material pressure is adjusted to track the target pressure,
wherein preferably the sensor is adapted to sense the injection material pressure at a position downstream of the control surface of the valve pin.

16. A method of performing an injection molding cycle comprising operating an apparatus according to any of the foregoing claims.

## Patentansprüche

1. Spritzgießvorrichtung (1), mit: einer Spritzgießmaschine (500), einem Verteiler (15), der ein Einspritzmaterial (18) unter Druck von der Spritzgießmaschine (500) empfängt, einer Form (25, 27, 300) mit einem Hohlraum (5, 30) und mindestens einem Ventil, aufweisend:
einen Aktuator (14, 940, 941, 942) mit einem Rotor (940r, 941r, 942r), der durch elektrische Energie steuerbar drehbar ist, wobei der Aktuator (14, 940, 941, 942) mit einer Steuereinheit (16) verbunden ist, die Ansteuersignale (DC) erzeugt;
eine elektrische Antriebsvorrichtung (940d, 941d, 942d) mit einer Schnittstelle, die die Ansteuersignale (DC) empfängt und steuerbar elektrische Energie oder Leistung in steuerbar veränderten Mengen gemäß den Ansteuersignalen (DC) an eine Antriebseinrichtung (940dr, 941dr, 942dr) verteilt, die den Rotor (940r, 941r, 942r) antreibt;
einen Ventilstift (1040, 1041, 1042), der eine Welle mit einer Achse (X) und eine Steuerfläche (43, 45, 102m) aufweist, die an einer ausgewählten Position entlang der Achse (X) der Welle angeordnet ist, wobei der Ventilstift an einem stromaufwärtsseitigen Ende mit dem Rotor in einer Anordnung verbunden ist, wobei der Ventilstift entlang eines linearen Bewegungspfades (XX) stromaufwärts und stromabwärts durch einen stromabwärtsseitigen Zufuhrkanal (17, 19, 160, 940c, 941c, 942c) steuerbar antreibbar ist, der das Einspritzmaterial zu und durch einen Angusskanal (7, 9, 32, 34, 36) leitet, der zum Hohlraum der Form führt,
wobei der stromabwärtsseitige Zufuhrkanal eine komplementäre Oberfläche (47, 103s) aufweist, die dazu geeignet ist, mit der Steuerfläche (43, 45, 102m) zusammenzuwirken, um eine Durchflussmenge oder eine Fließgeschwindigkeit gemäß der gesteuerten axialen Positionierung der Steuerfläche (43, 45, 102m) relativ zur komplementären Oberfläche (47, 103s) des stromabwärtsseitigen Zufuhrkanals (17, 19, 160, 940c, 941c, 942c) steuerbar zu verändern.

2. Vorrichtung nach Anspruch 1, wobei die komplementäre Oberfläche (47, 103s) stromaufwärts und entfernt vom Angusskanal (7, 9, 32, 34, 36) angeordnet ist.

3. Vorrichtung nach einem der vorangehenden Ansprüche, wobei die elektrische Antriebsvorrichtung (940d, 941d, 942d) elektrische Energie oder Leistung von einer Leistungsquelle (PS) empfängt und die empfangene elektrische Energie oder Leistung im Verlauf eines Einspritzzyklus in steuerbar veränderten Mengen an die Antriebseinrichtung (940dr, 941dr, 942dr) steuerbar verteilt.

4. Vorrichtung nach einem der vorangehenden Ansprüche, wobei die elektrische Antriebsvorrichtung (940d, 941d, 942d) einen Pulsbreitenmodulator (PWM) enthält, der die empfangene elektrische Energie oder Leistung in sinusförmige Spannungswellenformen umwandelt, wobei jede sinusförmige Spannungswellenform dazu geeignet ist, eine entsprechende Phasenspule der Aktuatorantriebseinrichtung (940dr, 941 dr, 942dr) anzusteuern.

5. Vorrichtung nach Anspruch 4,
wobei der Pulsbreitenmodulator (PWM) einen Wechselrichter oder einen Komparator aufweist, und/oder
wobei der Pulsbreitenmodulator (PWM) einen dreiphasigen Wechselrichter aufweist, der elektrische Energie oder Leistung, die von der Schnittstelle empfangen wird, in drei sinusförmige Spannungswellenformen umwandelt, wobei jede der drei sinusförmigen Spannungswellenformen dazu geeignet ist, eine entsprechende von drei Phasenspulen der Aktuatorantriebseinrichtung anzusteuern, und/oder
wobei die elektrische Energie oder Leistung, die am oder durch den Pulsbreitenmodulator (PWM) empfangen wird, eine Gleichstrom-Busspannung aufweist.

6. Vorrichtung nach einem der vorangehenden Ansprüche,
wobei die Schnittstelle der elektrischen Antriebsvorrichtung (940d, 941d, 942d) dazu geeignet ist, ein oder mehrere Steuersignale von einer Steuereinheit (16) der Spritzgießvorrichtung (1) zu empfangen und die von der Leistungsquelle (PS) empfangene elektrische Energie oder Leistung basierend auf dem einen oder den mehreren Steuersignalen in sinusförmige Wellenformen umzuwandeln, und/oder
wobei die Schnittstelle den Pulsbreitenmodulator (PWM) aufweist, der die von der Leistungsquelle empfangene elektrische Energie oder Leistung basierend auf dem einen oder den mehreren Steuersignalen in sinusförmige Wellenformen umwandelt.

7. Vorrichtung nach einem der vorangehenden Ansprüche,
wobei das eine oder die mehreren durch die Schnittstelle empfangenen Steuersignale Steuerinformation enthalten, die den Pulsbreitenmodulator (PWM) veranlassen, die empfangene elektrische Energie oder Leistung in sinusförmige Wellenformen umzuwandeln, die dazu geeignet sind, die entsprechenden Phasenspulen der Aktuatorantriebseinrichtung anzusteuern, um einen oder mehr Parameter unter einer Position, einer Geschwindigkeit oder einem Drehmoment des Aktuatorrotors (940r, 941r, 942r) einzustellen, und/oder
wobei das eine oder die mehreren Steuersignale analoge elektrische Signale aufweisen, die an der elektrischen Antriebsvorrichtung von der Steuereinheit (16) empfangen werden.

8. Vorrichtung nach einem der vorangehenden Ansprüche, wobei die elektrische Antriebsvorrichtung (940d, 941d, 942d) eine Digitalsignalempfangs-(16r) und/oder -sendeeinrichtung (16s) aufweist, wobei: die Digitalsignalempfangs- und -sendeeinrichtung dazu eingerichtet ist, Digitalsignale zwischen der elektrischen Antriebsvorrichtung (940d, 941d, 942d) und der Steuereinheit (16) der Spritzgießvorrichtung (1) zu empfangen (16r) und zu übertragen (16s), und wobei die Digitalsignale das eine oder die mehreren Steuersignale aufweisen, wobei das eine oder die mehreren Steuersignale digitale Steuersignale sind, die von der Steuereinheit empfangen werden,
wobei vorzugsweise die digitalen Steuersignale einen oder mehrere Differenzpositionsbefehle, Differenzstrombefehle und Differenzgeschwindigkeitsbefehle aufweisen.

9. Vorrichtung nach Anspruch 8, wobei die Digitalsignalempfangs- und -sendeeinrichtung (16r, 16s) dazu eingerichtet ist, Digitalsignale vom Aktuator zu empfangen, wobei die vom Aktuator empfangenen Digitalsignale ein oder mehrere Rückkopplungssignale aufweisen, die einem Betrieb des Aktuators und/oder des Aktuatorrotors entsprechen, wobei
die Digitalsignalempfangs- und -sendeeinrichtung (16r, 16s) dazu eingerichtet ist, an die Steuereinheit (16) ein Positionssignal (16s) zu übertragen, das eine Position des Ventilstifts anzeigt, und/oder
der Pulsbreitenmodulator (PWM) die von der Schnittstelle empfangene elektrische Energie oder Leistung in sinusförmige Wellenformen umwandelt, die dazu geeignet sind, die entsprechenden Phasenspulen der Aktuatorantriebseinrichtung zumindest teilweise basierend auf dem einen oder den mehreren Rückkopplungssignalen anzusteuern, und/oder
das eine oder die mehreren vom Aktuator empfangenen Rückkopplungssignale ein inkrementelles Rückkopplungssignal und/oder ein absolutes Rückkopplungssignal aufweisen.

10. Vorrichtung nach einem der vorangehenden Ansprüche, wobei der Aktuator ein Gehäuse (940h, 941h, 942h) aufweist, das den Rotor (940r, 941r, 942r) und die Antriebseinrichtung (940dr, 941dr, 942dr) aufnimmt, wobei das Gehäuse dazu eingerichtet ist, den Rotor (940r, 941r, 942r) zu tragen,
wobei die elektrische Antriebsvorrichtung (940d, 941d, 942d) im oder durch das Gehäuse (940h, 941h, 942h) aufgenommen oder daranmontiert ist, wobei das Gehäuse (940h, 941h, 942h) in der Nähe des geheizten Verteiler (40) montiert oder relativ dazu angeordnet ist, derart, dass das Gehäuse (940h, 941h, 942h) und/oder die elektrische Antriebsvorrichtung (940d, 941d, 942d) in wesentlicher Wärmekommunikation oder in wesentlichem Wärmekontakt mit dem geheizten Verteiler (40) steht oder stehen.

11. Vorrichtung nach Anspruch 10, wobei das Gehäuse (940h, 941h, 942h) auf oder an einer Klemmplatte (80) in einer derartigen Anordnung montiert ist, dass das Gehäuse (940h, 941h, 942h) und/oder die elektrische Antriebsvorrichtung (940d, 941d, 942d) in wesentlicher Wärme- oder thermischer Kommunikation mit dem geheizten Verteiler (40) steht oder stehen.

12. Vorrichtung nach Anspruch 10 oder 11, wobei das Gehäuse (940h, 941h, 942h) des Aktuators mit einem Linearbewegungswandler (940l, 941l, 942l) in einer Anordnung verbunden ist, bei der der Ventilstift (1040, 1041, 1042) dazu eingerichtet ist, entlang einer linearen Achse (X) angetrieben zu werden, die sich nicht koaxial zur Antriebsachse (y) erstreckt, wobei der Linearbewegungswandler (940I, 941l, 942I) auf oder an dem geheizten Verteiler (40) montiert oder in wärmeleitender Kommunikation damit angeordnet ist.

13. Vorrichtung nach Anspruch 12,
wobei der Linearbewegungswandler (940I, 941l, 942I) auf oder am geheizten Verteiler (40) und/oder einer Klemmplatte (80) montiert ist; und/oder
wobei der Linearbewegungswandler ein Wandlergehäuse (940lh) aufweist, das in direktem oder indirektem wärmeleitendem Kontakt mit dem geheizten Verteiler (40) montiert ist, wobei das Gehäuse (940h, 941h, 942h) mit dem Wandlergehäuse (940lh) in wärmeleitendem Kontakt verbunden ist, und/oder
wobei der Linearbewegungswandler ein Wandlergehäuse (940lh) aufweist, das auf oder an Halterungen montiert ist, die aus einem Metallmaterial bestehen und in direktem Metall-Metall-Kontakt oder in direkter Metall-Metall-Verbindung mit dem geheizten Verteiler (40) montiert sind.

14. Vorrichtung nach einem der vorangehenden Ansprüche, wobei der Ventilstift (1040, 1041, 1042) ein stromaufwärtsseitiges Ende (1041ue), das mit dem Aktuator verbunden ist, und ein stromabwärtsseitiges Ende (1041de) aufweist, das den Angusskanal bei einer stromabwärtsseitigen Bewegung des Ventilstifts in eine geschlossene Angusskanalposition schließt, wobei die Steuerfläche (43, 45, 102m) in einer ausgewählten axialen Position zwischen dem stromaufwärtsseitigen Ende (1041ue) und dem stromabwärtsseitigen Ende (1041de) angeordnet und dazu eingerichtet ist, mit der komplementären Fläche (103s) zusammenzuwirken, um die Materialflussrate bei einer stromaufwärtsseitigen Bewegung des Ventilstifts durch einen ausgewählten Bewegungspfad (CP) zu vermindern und die Materialflussrate bei einer stromabwärtsseitigen Bewegung des Ventilstifts durch den ausgewählten Bewegungspfad (CP) zu erhöhen.

15. Vorrichtung nach einem der vorangehenden Ansprüche, ferner mit einem Sensor (PSO, PS1, PS1a, PS2, PS2a), der den Druck des Einspritzmaterials erfasst, wobei der Sensor (PSO, PS1, PS1a, PS2, PS2a) ein den erfassten Druck anzeigendes Signal an die Steuereinheit (16) überträgt, wobei die Steuereinheit Anweisungen enthält, die den erfassten Druck mit einem Solldruck vergleichen und die axiale Position des Ventilstifts derart einstellen, dass der Materialdruck so eingestellt wird, dass er dem Solldruck folgt,
wobei der Sensor vorzugsweise dazu eingerichtet ist, den Druck des Einspritzmaterials an einer Position stromabwärts von der Steuerfläche des Ventilstifts zu erfassen.

16. Verfahren zum Ausführen eines Spritzgießzyklus, mit dem Betreiben einer Vorrichtung nach einem der vorangehenden Ansprüche.

## Revendications

1. Appareil de moulage par injection (1) comprenant : une machine de moulage par injection (500), un collecteur (15) qui reçoit un matériau d'injection (18) sous pression en provenance de la machine de moulage par injection (500), un moule (25, 27, 300) présentant une cavité (5, 30) et au moins une soupape comprenant :
un actionneur (14, 940, 941, 942) comprenant un rotor (940r, 941r, 942r) dont la rotation peut être commandée par la puissance électrique, l'actionneur (14, 940, 941, 942) étant interconnecté à un dispositif de commande (16) qui génère des signaux de pilotage (DC),
un dispositif de pilotage électrique (940d, 941d, 942d) comprenant une interface qui reçoit les signaux de pilotage (DC) et qui distribue de façon contrôlée l'énergie ou la puissance électrique selon des quantités modulables en fonction des signaux de pilotage (DC) à un dispositif de pilotage (940dr, 941dr, 942dr) qui pilote le rotor (940r, 941r, 942r),
une tige de soupape (1040, 1041, 1042) comprenant un arbre présentant un axe (X) et une surface de commande (43, 45, 102m) disposée en une position choisie sur l'axe (X) de l'arbre, la tige de soupape étant interconnectée en une extrémité amont au rotor selon une disposition dans laquelle la tige de soupape est pilotable de façon contrôlée le long d'un trajet de déplacement linéaire (XX) vers l'amont et vers l'aval par l'intermédiaire d'un canal d'alimentation aval (17, 19, 160, 940c, 941c, 942c) qui achemine le matériau d'injection vers et à travers une vanne (7, 9, 32, 34, 36) menant à la cavité du moule,
le canal d'alimentation aval présentant une surface complémentaire (47, 103s) adaptée à former une interface avec la surface de commande (43 45, 102m) pour moduler le débit ou la vitesse de l'écoulement en fonction du positionnement axial contrôlé de la surface de commande (43, 45, 102m) par rapport à la surface complémentaire (47, 103s) du canal d'alimentation aval (17, 19, 160, 940c, 941c, 942c).

2. Appareil selon la revendication 1, dans lequel la surface complémentaire (47, 103s) est disposée en amont et à distance de la vanne (7, 9, 32, 34, 36).

3. Appareil selon l'une quelconque des revendications précédentes dans lequel le dispositif de pilotage électrique (940d, 941d, 942d) reçoit de l'énergie ou de la puissance électrique en provenance d'une source d'alimentation (PS) et distribue de façon contrôlée l'énergie ou la puissance électrique reçue en des quantités modulables au cours d'un cycle d'injection dans le dispositif de pilotage (940dr, 941dr, 942dr).

4. Appareil selon l'une quelconque des revendications précédentes dans lequel le dispositif de pilotage électrique (940d, 941d, 942d) comprend un modulateur de largeur d'impulsions (PWM) qui convertit l'énergie ou la puissance électrique reçue en formes d'onde sinusoïdales, chaque forme d'onde sinusoïdale étant adaptée à piloter un bobinage de phase correspondant du dispositif de pilotage de l'actionneur (940dr, 941dr, 942dr).

5. Appareil selon la revendication 4,
dans lequel le modulateur de largeur d'impulsions (PWM) comprend un inverseur ou un comparateur, et/ou
dans lequel le modulateur de largeur d'impulsions (PWM) comprend un inverseur triphasé qui convertit l'énergie ou la puissance électrique reçue de l'interface en trois formes d'onde sinusoïdales, chacune des trois formes d'onde sinusoïdales étant adaptée à piloter le bobinage de phase correspondant parmi les trois bobinages de phase du dispositif de pilotage de l'actionneur, et/ou
dans lequel l'énergie ou la puissance électrique reçue au niveau de ou par le modulateur de largeur d'impulsions (PWM) comprend une tension de bus continue.

6. Appareil selon chacune des revendications précédentes,
dans lequel l'interface du dispositif de pilotage électrique (940dr, 941dr, 942dr) est adaptée à recevoir un ou plusieurs signaux de commande en provenance d'un dispositif de commande (16) de l'appareil de moulage par injection (1) et à convertir l'énergie ou la puissance électrique reçue en provenance de la source d'alimentation (PS) en formes d'onde sinusoïdales à partir des un ou plusieurs signaux de commande ; et/ou
dans lequel l'interface est constituée du modulateur de largeur d'impulsions (PWM) qui convertit l'énergie ou la puissance électrique reçue de la source de puissance en formes d'onde sinusoïdales à partir des un ou plusieurs signaux de commande.

7. Appareil selon chacune des revendications précédentes,
dans lequel les uns ou plusieurs signaux de commande reçus par l'interface contiennent des informations de commande entraînant la conversion par le modulateur de largeur d'impulsions (PWM) de l'énergie ou de la puissance électrique reçue en formes d'onde sinusoïdales adaptées à piloter les bobinages de phase correspondants du dispositif de pilotage de l'actionneur pour régler un ou plusieurs d'entre une position, une vitesse ou un couple du rotor d'actionneur (940r, 941r, 942r) ; et/ou
dans lequel les un ou plusieurs signaux de commande comprennent des signaux électriques analogiques reçus au niveau du dispositif de pilotage électrique en provenance du contrôleur (16).

8. Appareil selon chacune des revendications précédentes, dans lequel le dispositif de pilotage électrique (940d, 941d, 942d) comprend l'un ou l'autre ou l'un et l'autre d'un dispositif de réception (16r) et d'émission (16s) de signaux numériques, dans lequel : le dispositif de réception (16r) et d'émission (16s) de signaux numériques est adapté à recevoir (16r) et à émettre (16s) des signaux numériques entre le dispositif de pilotage électrique (940d, 941d, 942d) et le dispositif de commande (16) de l'appareil de moulage par injection (1); et dans lequel les signaux numériques comprennent les un ou plusieurs signaux de commande, les un ou plusieurs signaux de commande étant des signaux de commande numériques reçus en provenance du dispositif de commande,
dans lequel de préférence les signaux de commande numériques comprennent une ou plusieurs d'entre des commandes de position différentielles, des commandes de courant différentielles et des commandes de vitesse différentielles.

9. Appareil selon la revendication 8, dans lequel le dispositif de réception et d'émission de signaux numériques (16r, 16s) est adapté à recevoir des signaux numériques en provenance de l'actionneur, dans lequel : les signaux numériques reçus de l'actionneur comprennent un ou plusieurs signaux de rétroaction correspondant au fonctionnement d'un ou plusieurs d'entre l'actionneur et le rotor d'actionneur, dans lequel
le dispositif de réception et d'émission de signaux numériques (16r, 16s) est adapté à émettre à destination du dispositif de commande (16) un signal de position (16s) indicateur d'une position de la tige de soupape, et/ou
le modulateur de largeur d'impulsions (PWM) convertit l'énergie ou la puissance électrique reçue en provenance de l'interface en formes d'onde sinusoïdales adaptées à piloter les bobinages de phase correspondants du dispositif de pilotage de l'actionneur à partir d'au moins en partie les un ou plusieurs signaux de rétroaction, et/ou
les un ou plusieurs signaux de rétroaction reçus de l'actionneur comprennent un ou plusieurs d'entre un signal de rétroaction incrémentiel et un signal de rétroaction absolu.

10. Appareil selon chacune des revendications précédentes dans lequel l'actionneur comprend un boîtier (940rh, 941rh, 942rh) dans lequel est logé le rotor (940r, 941r, 942r) et le dispositif de pilotage (940dr, 941dr, 942dr), le boîtier étant adapté à supporter le rotor (940r, 941r, 942r),
le dispositif de pilotage électrique (940d, 941d, 942d) étant logé au sein du ou par le boîtier (940h, 941h, 942h) ou étant monté sur ou au boîtier (940h, 941h, 942h),
dans lequel le boîtier (940h, 941h, 942h) est monté à proximité de ou dans une disposition relative au collecteur chauffant (40), telle que l'un ou l'autre ou l'un et l'autre du boîtier (940h, 941h, 942h) et du dispositif de pilotage électrique (940d, 941d, 942d) est ou sont en communication de chaleur substantielle ou en contact avec le collecteur chauffant (40).

11. Appareil selon la revendication 10, dans lequel le boîtier (940h, 941h, 942h) est monté sur ou à une plaque de serrage (80) dans une disposition telle que l'un ou l'autre ou l'un et l'autre du boîtier (940h, 941h, 942h) et du dispositif de pilotage électrique (940d, 941d, 942d) sont en communication de chaleur ou thermique substantielle ou en contact avec le collecteur chauffant (40).

12. Appareil selon la revendication 10 ou la revendication 11, dans lequel le boîtier (940h, 941h, 942h) de l'actionneur est interconnecté à un convertisseur de trajet linéaire (940l, 941l, 942l) dans une disposition dans laquelle la tige de soupape (1040, 1041, 1042) est adaptée à être déplacée le long d'un axe linéaire (X) qui est non coaxial à l'axe de pilotage (y), le convertisseur de trajet linéaire (940l, 9411, 942l) étant monté sur ou à ou disposé en communication conductrice de chaleur avec le collecteur chauffant (40).

13. Appareil selon la revendication 12,
dans lequel le convertisseur de trajet linéaire (940l, 941l, 942l) est monté sur ou à l'un ou l'autre ou l'un et l'autre du collecteur chauffant (40) ou d'une plaque de serrage (80) ; et/ou
dans lequel le convertisseur de trajet linéaire comprend un boîtier de convertisseur (940lh) monté en contact conducteur de chaleur direct ou indirect avec le collecteur chauffant (40), le boîtier (940h, 941h, 942h) étant connecté au boîtier de convertisseur (940lh) en contact thermiquement conducteur avec celui-ci ; et/ou
dans lequel le convertisseur de trajet linéaire comprend un boîtier de convertisseur (940lh) monté sur ou à des supports constitués d'un matériau métallique qui sont montés en contact ou communication métal-métal direct(e) avec le collecteur chauffant (40).

14. Appareil selon chacune des revendications précédentes, dans lequel la tige de soupape (1040, 1041, 1042) présente une extrémité amont (1041ue) couplée à l'actionneur, une extrémité aval (1041de) qui ferme la vanne lors d'un mouvement vers l'aval de la tige de soupape vers une position de vanne fermée, la surface de commande (43, 45, 102m) étant disposée en une position axiale choisie intermédiaire entre les extrémités amont (1041ue) et aval (1041 de) qui est adaptée à interagir avec la surface complémentaire (103s) pour réduire le débit d'écoulement de matériau lors d'un mouvement vers l'amont de la tige de soupape sur un parcours choisi (CP) et pour augmenter le débit d'écoulement de matériau lors d'un mouvement vers l'aval de la tige de soupape sur le parcours choisi (CP).

15. Appareil selon l'une quelconque des revendications précédentes, comprenant en outre un capteur (PS0, PS1, PS1a, PS2, PS2a) qui détecte la pression du matériau d'injection, le capteur (PS0, PS1, PS1a, PS2, PS2a) envoyant un signal indicateur de la pression détectée au dispositif de commande (16), le dispositif de commande comprenant des instructions qui comparent la pression détectée à une pression cible et règlent la position axiale de la tige de soupape de manière à régler la pression de matériau pour suivre la pression cible,
dans lequel de préférence le capteur est adapté à détecter la pression de matériau d'injection en une position en aval de la surface de commande de la tige de soupape.

16. Procédé de réalisation d'un cycle de moulage par injection comprenant la mise en fonctionnement d'un appareil selon l'une quelconque des revendications précédentes.
